(19) **Europäisches Patentamt / European Patent Office / Office européen des brevets**

(11) **EP 4 625 303 A1**

(12) **EUROPEAN PATENT APPLICATION**
published in accordance with Art. 153(4) EPC

(43) Date of publication:
01.10.2025 Bulletin 2025/40

(21) Application number: 23900073.0

(22) Date of filing: 08.12.2023

(51) International Patent Classification (IPC):
*G06Q 50/20* (2012.01) *G06N 3/0464* (2023.01)

(86) International application number:
PCT/CN2023/137320

(87) International publication number:
WO 2024/120504 (13.06.2024 Gazette 2024/24)

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
KH MA MD TN

(30) Priority: 09.12.2022 CN 202211581938

(71) Applicant: Huawei Technologies Co., Ltd.
Shenzhen, Guangdong 518129 (CN)

(72) Inventors:
• XIA, Wei
Shenzhen, Guangdong 518129 (CN)
• CHEN, Xianyu
Shanghai 200240 (CN)
• LIU, Weiwen
Shenzhen, Guangdong 518129 (CN)
• TANG, Ruiming
Shenzhen, Guangdong 518129 (CN)
• ZHANG, Weinan
Shanghai 200240 (CN)
• YU, Yong
Shanghai 200240 (CN)

(74) Representative: Isarpatent
Patent- und Rechtsanwälte
Barth Hassa Peckmann & Partner mbB
Friedrichstraße 31
80801 München (DE)

(54) **DATA PROCESSING METHOD AND RELATED DEVICE**

(57) A data processing method is applied to recommendation of a learning order of knowledge points. The method includes: obtaining feature representations of a plurality of knowledge points and a first learning state of a user, where the first learning state indicates a user's level of mastery of a learned knowledge point, and the plurality of knowledge points are different from the learned knowledge point; and obtaining, by using a decoder based on the feature representations of the plurality of knowledge points, the first learning state, and a learning objective, a learning order corresponding to the plurality of knowledge points, where the decoder is configured to identify a relationship between the feature representations of the plurality of knowledge points and the learning objective in the first learning state. In this application, when the learning order of the knowledge points is determined, the learning order of the plurality of knowledge points is determined in a sequence generation manner based on a current learning state of the user, and a sequence is not necessarily selected from a large quantity of learning orders. In this way, a finally determined learning order is not limited to a path used by another user for learning in the past, thereby improving a personalization degree of a learning path and learning effect.

[FIG. 4]

Obtain feature representations of a plurality of knowledge points and a first learning state of a user, where the first learning state indicates a user's level of mastery of a learned knowledge point, and the plurality of knowledge points are different from the learned knowledge point — 401

Obtain, by using a decoder based on the feature representations of the plurality of knowledge points, the first learning state, and a learning objective, a learning order corresponding to the plurality of knowledge points, where the decoder is configured to identify a relationship between the feature representations of the plurality of knowledge points and the learning objective in the first learning state — 402

Determine a reward value based on a level of mastery of each knowledge point by the user after learning the plurality of knowledge points according to the learning order, where the reward value is used to update the decoder — 403

**Description**

This application claims priority to Chinese Patent Application No. 202211581938.8, filed with the China National Intellectual Property Administration on December 9, 2022 and entitled "DATA PROCESSING METHOD AND RELATED DEVICE", which is incorporated herein by reference in its entirety.

TECHNICAL FIELD

This application relates to the field of artificial intelligence, and in particular, to a data processing method and a related device.

BACKGROUND

Personalized learning aims to provide customized learning content for different users based on their characteristics and requirements. In an existing learning content recommendation scenario, a complete learning path (or may be referred to as a learning order of knowledge points) may be recommended to students at the beginning of recommendation. For example, a university recommends a learning order of courses arranged for the students.

In an existing learning path planning algorithm, content-based filtering or collaborative filtering is mainly used to search for and reconstruct a user behavior sequence. In this method, users are clustered and grouped based on user characteristics by using a clustering algorithm. In this way, paths used by users in a same group for learning can be used as candidate recommendation paths. Then, a model is trained to estimate performance of these paths, to filter out paths with poor learning effect. Finally, a matching degree between a candidate path and a target user is calculated based on factors such as the user characteristics, knowledge point features, and path composition, and the most suitable path is selected and recommended to the user. In this method, although the learning path can be quickly recommended, the path recommended in this method can only be derived from a path used by another user for learning in the past. This makes it difficult to ensure a personalization degree of the recommended path and learning effect.

SUMMARY

This application provides a data processing method, to improve a personalization degree of a learning path and learning effect.

According to a first aspect, this application provides a data processing method. The method includes: obtaining feature representations of a plurality of knowledge points and a first learning state of a user, where the first learning state indicates a user's level of mastery of a learned knowledge point, and the plurality of knowledge points are different from the learned knowledge point; and obtaining, by using a decoder based on the feature representations of the plurality of knowledge points, the first learning state, and a learning objective, a learning order corresponding to the plurality of knowledge points, where the decoder is configured to identify a relationship between the feature representations of the plurality of knowledge points and the learning objective in the first learning state.

In this embodiment of this application, when the learning order of the knowledge points is determined, the learning order of the plurality of knowledge points is determined in a sequence generation manner based on a current learning state of the user, instead of using a complete learning order as a granularity, and a sequence is not necessarily selected from a large quantity of learning orders. In this way, a finally determined learning order is not limited to a path used by another user for learning in the past, thereby improving a personalization degree of a learning path and learning effect.

In a possible implementation, obtaining the feature representations of the plurality of knowledge points includes: obtaining the feature representations of the plurality of knowledge points based on information about the plurality of knowledge points by using an encoder, where the encoder includes a first network and a second network, the first network is an attention mechanism-based neural network, and the second network includes an MLP network. Obtaining the feature representations of the plurality of knowledge points based on the information about the plurality of knowledge points by using the encoder includes: obtaining a first feature representation and a second feature representation of the plurality of knowledge points based on the information about the plurality of knowledge points by using the first network and the second network respectively; and performing fusion on the first feature representation and the second feature representation to obtain the feature representations.

In the foregoing manner, not only correlation between concepts is explored, but also features of the concepts are retained.

In a possible implementation, the second network further includes an average pooling network connected in parallel with the MLP network.

In a possible implementation, the fusion is concatenation.

In a possible implementation, obtaining, by using the decoder based on the feature representations, the learning order corresponding to the plurality of knowledge points includes: sequentially obtaining, by using the decoder based on the feature representations, a knowledge point at each position in the learning order. When determining a knowledge point at an $N^{th}$ position in the learning order, the decoder is configured to identify a relationship between feature representations of other knowledge points different from knowledge points at N-1 positions in the plurality of knowledge points and the learning objective in the first learning state.

In a possible implementation, the decoder includes an LSTM and an attention layer. Sequentially obtaining, by using the decoder based on the feature representations, the knowledge point at each position in the learning order includes: processing, by using the LSTM, the feature representations of the other knowledge points different from the knowledge points at the N-1 positions in the plurality of knowledge points and feature representations of the determined knowledge points at the N-1 positions, to obtain target feature representations of the other knowledge points different from the knowledge points at the N-1 positions in the plurality of knowledge points; performing processing based on the target feature representations and the learning objective by using the attention layer, to obtain a probability that each of the other knowledge points is at the $N^{th}$ position; and determining, based on the probability that each of the other knowledge points is at the $N^{th}$ position, the knowledge point at the $N^{th}$ position through sampling.

According to a second aspect, this application provides a data processing method. The method includes:

obtaining feature representations of a plurality of knowledge points and a first learning state of a user, where the first learning state indicates a user's level of mastery of a learned knowledge point, and the plurality of knowledge points are different from the learned knowledge point;

obtaining, by using a decoder based on the feature representations of the plurality of knowledge points, the first learning state, and a learning objective, a learning order corresponding to the plurality of knowledge points, where the decoder is configured to identify a relationship between the feature representations of the plurality of knowledge points and the learning objective in the first learning state; and

determining a reward value based on a level of mastery of each knowledge point by the user after learning the plurality of knowledge points according to the learning order, where the reward value is used to update the decoder.

In a possible implementation, determining the reward value based on the level of mastery of each knowledge point by the user after learning the plurality of knowledge points according to the learning order includes: determining the reward value based on the level of mastery of each knowledge point by the user after learning the plurality of knowledge points according to the learning order and a degree of completion of the learning objective by the user after learning the plurality of knowledge points according to the learning order.

In a possible implementation, obtaining the feature representations of the plurality of knowledge points includes: obtaining the feature representations of the plurality of knowledge points based on information about the plurality of knowledge points by using an encoder, where the encoder includes a first network and a second network, the first network is an attention mechanism-based neural network, and the second network includes an MLP network.

Obtaining the feature representations of the plurality of knowledge points based on the information about the plurality of knowledge points by using the encoder includes:

obtaining a first feature representation and a second feature representation of the plurality of knowledge points based on the information about the plurality of knowledge points by using the first network and the second network respectively; and

performing fusion on the first feature representation and the second feature representation to obtain the feature representations.

In a possible implementation, the second network further includes an average pooling network connected in parallel with the MLP network.

In a possible implementation, the fusion is concatenation.

In a possible implementation, obtaining, by using the decoder based on the feature representations, the learning order corresponding to the plurality of knowledge points includes: sequentially obtaining, by using the decoder based on the feature representations, a knowledge point at each position in the learning order. When determining a knowledge point at an $N^{th}$ position in the learning order, the decoder is configured to identify a relationship between feature representations of other knowledge points different from knowledge points at N-1 positions in the plurality of knowledge points and the learning objective in the first learning state.

In a possible implementation, the decoder includes an LSTM and an attention layer.

Sequentially obtaining, by using the decoder based on the feature representations, the knowledge point at each position in the learning order includes:

processing, by using the LSTM, the feature representations of the other knowledge points different from the knowledge points at the N-1 positions in the plurality of knowledge points and feature representations of the determined knowledge points at the N-1 positions, to obtain target feature representations of the other knowledge points different from the knowledge points at the N-1 positions in the plurality of knowledge points;

performing processing based on the target feature representations and the learning objective by using the attention layer, to obtain a probability that each of the other knowledge points is at the $N^{th}$ position; and

determining, based on the probability that each of the other knowledge points is at the $N^{th}$ position, the knowledge point at the $N^{th}$ position through sampling.

According to a third aspect, this application provides a data processing apparatus. The apparatus includes:

an encoding module, configured to obtain feature representations of a plurality of knowledge points and a first learning state of a user, where the first learning state indicates a user's level of mastery of a learned knowledge point, and the plurality of knowledge points are different from the learned knowledge point; and

a decoding module, configured to obtain, by using a decoder based on the feature representations of the plurality of knowledge points, the first learning state, and a learning objective, a learning order corresponding to the plurality of knowledge points, where the decoder is configured to identify a relationship between the feature representations of the plurality of knowledge points and the learning objective in the first learning state.

In a possible implementation, the encoder includes a first network and a second network, the first network is an attention mechanism-based neural network, and the second network includes an MLP network.

The encoding module is specifically configured to:

obtain a first feature representation and the second feature representation of the plurality of knowledge points based on information about the plurality of knowledge points by using the first network and the second network respectively; and

perform fusion on the first feature representation and the second feature representation to obtain the feature representations.

In a possible implementation, the second network further includes an average pooling network connected in parallel with the MLP network.

In a possible implementation, the fusion is concatenation.

In a possible implementation, the decoding module is specifically configured to:

sequentially obtain, by using the decoder based on the feature representations, a knowledge point at each position in the learning order. When determining a knowledge point at an $N^{th}$ position in the learning order, the decoder is configured to identify a relationship between feature representations of other knowledge points different from knowledge points at N-1 positions in the plurality of knowledge points and the learning objective in the first learning state.

In a possible implementation, the decoder includes an LSTM and an attention layer.

The decoding module is specifically configured to:

process, by using the LSTM, the feature representations of the other knowledge points different from the knowledge points at the N-1 positions in the plurality of knowledge points and feature representations of the determined knowledge points at the N-1 positions, to obtain target feature representations of the other knowledge points different from the knowledge points at the N-1 positions in the plurality of knowledge points;

perform processing based on the target feature representations and the learning objective by using the attention layer, to obtain a probability that each of the other knowledge points is at the $N^{th}$ position; and

determine, based on the probability that each of the other knowledge points is at the $N^{th}$ position, the knowledge point at the $N^{th}$ position through sampling.

According to a fourth aspect, this application provides a data processing apparatus. The apparatus includes:

an encoding module, configured to obtain feature representations of a plurality of knowledge points and a first learning state of a user, where the first learning state indicates a user's level of mastery of a learned knowledge point, and the plurality of knowledge points are different from the learned knowledge point;

a decoding module, configured to obtain, by using a decoder based on the feature representations of the plurality of knowledge points, the first learning state, and a learning objective, a learning order corresponding to the plurality of knowledge points, where the decoder is configured to identify a relationship between the feature representations of the plurality of knowledge points and the learning objective in the first learning state; and

an updating module, configured to determine a reward value based on a level of mastery of each knowledge point by the user after learning the plurality of knowledge points according to the learning order, where the reward value is used to update the decoder.

In a possible implementation, the updating module is specifically configured to:

determine the reward value based on the level of mastery of each knowledge point by the user after learning the plurality of knowledge points according to the learning order and a degree of completion of the learning objective by the user after learning the plurality of knowledge points according to the learning order.

In a possible implementation, the encoder includes a first network and a second network, the first network is an attention mechanism-based neural network, and the second network includes an MLP network.

The encoding module is specifically configured to:

obtain a first feature representation and the second feature representation of the plurality of knowledge points based on information about the plurality of knowledge points by using the first network and the second network respectively; and

perform fusion on the first feature representation and the second feature representation to obtain the feature representations.

In a possible implementation, the second network further includes an average pooling network connected in parallel with the MLP network.

In a possible implementation, the fusion is concatenation.

In a possible implementation, the decoding module is specifically configured to:

sequentially obtain, by using the decoder based on the feature representations, a knowledge point at each position in the learning order. When determining a knowledge point at an $N^{th}$ position in the learning order, the decoder is configured to identify a relationship between feature representations of other knowledge points different from knowledge points at N-1 positions in the plurality of knowledge points and the learning objective in the first learning state.

In a possible implementation, the decoder includes an LSTM and an attention layer.

The decoding module is specifically configured to:

process, by using the LSTM, the feature representations of the other knowledge points different from the knowledge points at the N-1 positions in the plurality of knowledge points and feature representations of the determined knowledge points at the N-1 positions, to obtain target feature representations of the other knowledge points different from the knowledge points at the N-1 positions in the plurality of knowledge points;

perform processing based on the target feature representations and the learning objective by using the attention layer, to obtain a probability that each of the other knowledge points is at the $N^{th}$ position; and

determine, based on the probability that each of the other knowledge points is at the $N^{th}$ position, the knowledge point at the $N^{th}$ position through sampling.

According to a fifth aspect, an embodiment of this application provides a data processing apparatus. The data processing apparatus may include a memory, a processor, and a bus system. The memory is configured to store a program. The processor is configured to execute the program in the memory, to perform the method according to any one of the first aspect and the optional implementations of the first aspect.

According to a sixth aspect, an embodiment of this application provides a data processing apparatus. The data processing apparatus may include a memory, a processor, and a bus system. The memory is configured to store a program. The processor is configured to execute the program in the memory, to perform the method according to any one of the second aspect and the optional implementations of the second aspect.

According to a seventh aspect, an embodiment of this application provides a computer-readable storage medium. The computer-readable storage medium stores a computer program, and when the computer program is run on a computer, the computer is enabled to perform the method according to any one of the first aspect and the optional implementations of the first aspect.

According to an eighth aspect, an embodiment of this application provides a computer-readable storage medium. The computer-readable storage medium stores a computer program, and when the computer program is run on a computer, the computer is enabled to perform the method according to any one of the second aspect and the optional implementations of the second aspect.

According to a ninth aspect, an embodiment of this application provides a computer program product including instructions. When the computer program product is run on a computer, the computer is enabled to perform the method according to any one of the first aspect and the optional implementations of the first aspect.

According to a tenth aspect, an embodiment of this application provides a computer program product including instructions. When the computer program product is run on a computer, the computer is enabled to perform the method according to any one of the second aspect and the optional implementations of the second aspect.

According to an eleventh aspect, this application provides a chip system. The chip system includes a processor, configured to support a data processing apparatus in implementing some or all of functions in the foregoing aspects, for example, sending or processing data or information in the foregoing methods. In a possible design, the chip system further includes a memory. The memory is configured to store program instructions and data that are necessary for the execution device or the training device. The chip system may include a chip, or may include a chip and another discrete component.

BRIEF DESCRIPTION OF DRAWINGS

FIG. 1 is a diagram of an application architecture;
FIG. 2 is a diagram of an application architecture;
FIG. 3 is a diagram of an application architecture;
FIG. 4 is a diagram of an embodiment of a data processing method according to an embodiment of this application;
FIG. 5 is a diagram of an embodiment of a network structure according to an embodiment of this application;
FIG. 6 is a diagram of an embodiment of a data processing method according to an embodiment of this application;
FIG. 7 is a diagram of an embodiment of a data processing apparatus according to an embodiment of this application;
FIG. 8 is a diagram of an embodiment of a data processing apparatus according to an embodiment of this application;
FIG. 9 is a diagram of a structure of an execution device according to an embodiment of this application;
FIG. 10 is a diagram of a structure of a server according to an embodiment of this application; and
FIG. 11 is a diagram of a structure of a chip according to an embodiment of this application.

DESCRIPTION OF EMBODIMENTS

The following describes embodiments of the present invention with reference to the accompanying drawings in embodiments of the present invention. Terms used in embodiments of the present invention are merely intended to explain specific embodiments of the present invention, and are not intended to limit the present invention.

The following describes embodiments of this application with reference to the accompanying drawings. A person of ordinary skill in the art may learn that, with development of technologies and emergence of a new scenario, the technical solutions provided in embodiments of this application are also applicable to a similar technical problem.

In the specification, claims, and accompanying drawings of this application, the terms "first", "second", and the like are intended to distinguish between similar objects but do not necessarily indicate a specific order or sequence. It should be understood that the terms used in such a way are interchangeable in proper circumstances, which is merely a discrimination manner that is used when objects having a same attribute are described in embodiments of this application. In addition, the terms "include", "contain" and any other variants mean to cover a non-exclusive inclusion, so that a process, method, system, product, or device that includes a series of units is not necessarily limited to those units, but may include other units not expressly listed or inherent to such a process, method, product, or device.

Terms "substantially (substantially)", "about (about)", and similar terms are used in this specification as approximate terms rather than as degree terms, and are intended to take into account inherent deviations of measured values or calculated values that are known to those of ordinary skill in the art. In addition, when embodiments of the present invention are described, "may (may)" is used to mean "one or more possible embodiments". Terms "use (use)", "using (using)", and "used (used)" that are used in this specification may be considered to be synonymous with terms "utilize (utilize)", "utilizing (utilizing)", and "utilized (utilized)", respectively. In addition, the term "exemplary (exemplary)" is intended to refer to an instance or an example.

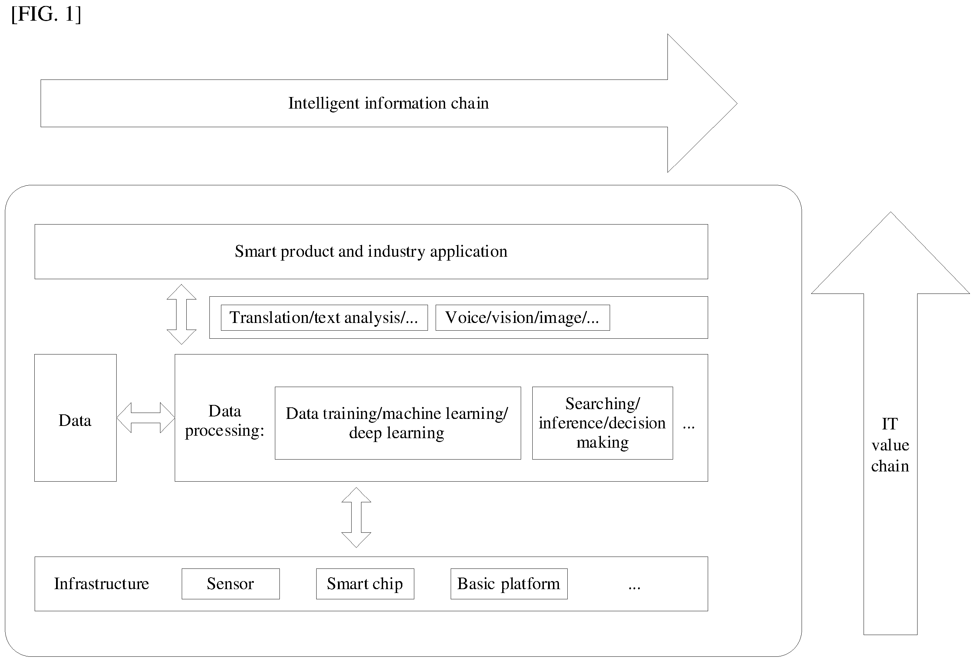

An overall working procedure of an artificial intelligence system is first described. FIG. 1 is a diagram of a structure of an artificial intelligence main framework. The following describes the artificial intelligence main framework from two dimensions: an "intelligent information chain" (a horizontal axis) and an "IT value chain" (a vertical axis). The "intelligent information chain" reflects a series of processes from obtaining data to processing the data. For example, the process may be a general process of intelligent information perception, intelligent information representation and formation, intelligent inference, intelligent decision-making, and intelligent execution and output. In this process, the data undergoes a refinement process of "data-information-knowledge-intelligence". The "IT value chain" reflects a value brought by artificial intelligence to the information technology industry from an underlying infrastructure and information (technology providing and processing implementation) of artificial intelligence to an industrial ecological process of a system.

(1) Infrastructure

The infrastructure provides computing capability support for the artificial intelligence system, implements communication with the external world, and implements support by using a basic platform. The infrastructure communicates with the outside by using a sensor. A computing capability is provided by a smart chip (a hardware acceleration chip such as a CPU, an NPU, a GPU, an ASIC, or an FPGA). The basic platform includes related platforms such as a distributed computing framework and a network for assurance and support, including cloud storage and computing, an interconnection network, and the like. For example, the sensor communicates with the outside to obtain data, and the data is provided to a smart chip in a distributed computing system provided by the basic platform for computing.

(2) Data

Data at an upper layer of the infrastructure indicates a data source in the field of artificial intelligence. The data relates to a graph, an image, a speech, and text, further relates to Internet of Things data of a conventional device, and includes service data of an existing system and perception data such as force, displacement, a liquid level, a temperature, and humidity.

(3) Data processing

Data processing usually includes data training, machine learning, deep learning, searching, inference, decision making, and the like.

Machine learning and deep learning may mean performing symbolic and formalized intelligent information modeling, extraction, preprocessing, training, and the like on data.

Inference is a process in which human intelligent inference is simulated in a computer or an intelligent system, and machine thinking and problem resolving are performed by using formalized information according to an inference control policy. A typical function is searching and matching.

Decision making is a process of making a decision after intelligent information is inferred, and usually provides functions such as classification, ranking, and prediction.

(4) General capability

After data processing mentioned above is performed on the data, some general capabilities may be further formed based on a data processing result. For example, the general capabilities may be an algorithm or a general system such as translation, text analysis, computer vision processing, speech recognition, and image recognition.

(5) Smart product and industry application

The smart product and industry application are products and applications of the artificial intelligence system in various fields. The smart product and industry application involve packaging overall artificial intelligence solutions, to productize and apply intelligent information decision-making. Application fields of the intelligent information decision-making mainly include a smart terminal, smart transportation, smart healthcare, autonomous driving, a smart city, and the like.

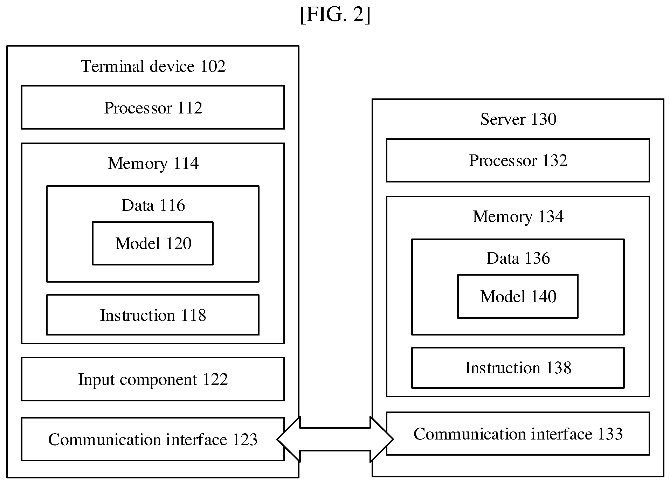

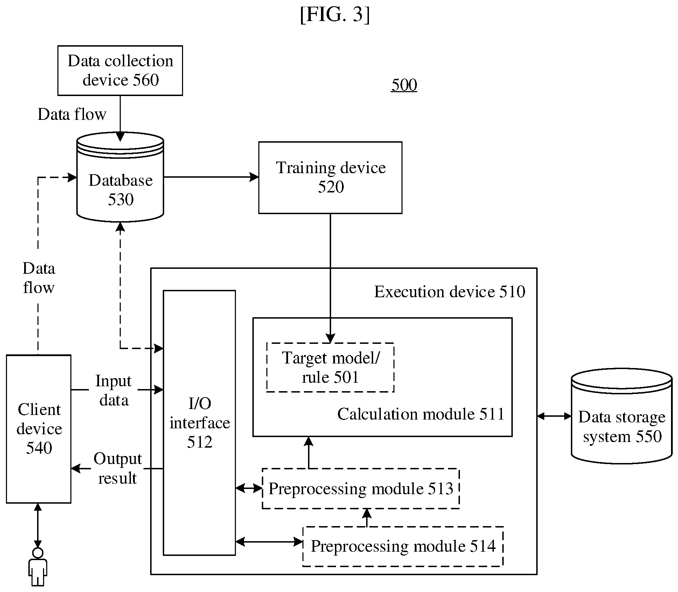

To better understand the solutions in embodiments of this application, the following briefly describes possible implementation architectures in embodiments of this application with reference to FIG. 2 and FIG. 3.

FIG. 2 is a diagram of a computing system for model training according to an embodiment of this application. The computing system includes a terminal device 102 (for example, the terminal device 102 may not be included) and a server 130 (which may also be referred to as a central node) that are communicatively coupled through a network. The terminal device 102 may be any type of computing device, for example, a personal computing device (for example, a laptop computer or a desktop computer), a mobile computing device (for example, a smartphone or a tablet), a game console or controller, a wearable computing device, an embedded computing device, or another type of computing device.

The terminal device 102 may include a processor 112 and a memory 114. The processor 112 may be any suitable processing device (for example, a processor core, a microprocessor, an application-specific integrated circuit (application-specific integrated circuit, ASIC), a field programmable gate array (field programmable gate array, FPGA), a controller, or a microcontroller). The memory 114 may include but is not limited to a random access memory (random access memory, RAM), a read-only memory (read-only memory, ROM), an erasable programmable read-only memory (erasable programmable read-only memory, EPROM), a compact disc read-only memory (compact disc read-only memory, CD-ROM), or the like. The memory 114 may store data 116 and an instruction 118 that are executed by the processor 112, so that the terminal device 102 performs an operation.

In some implementations, the memory 114 may store one or more models 120. For example, the model 120 may be or may additionally include various machine learning models, for example, a neural network (for example, a deep neural network) or another type of machine learning model, including a nonlinear model and/or a linear model. The neural network may include a feedforward neural network, a recurrent neural network (for example, a long short-term memory recurrent neural network), a convolutional neural network, or a neural network in another form.

In some implementations, the one or more models 120 may be received through a network 180 from the server 130, stored in the memory 114, and then used or implemented by one or more processors 112.

The terminal device 102 may further include one or more user input components 122 that receive a user input. For example, the user input component 122 may be a touch-sensitive component (for example, a touch-sensitive display or a touchpad) that is sensitive to a touch of a user input object (for example, a finger or a stylus). The touch-sensitive component may be configured to implement a virtual keyboard. For another example, the user input component includes a microphone, a conventional keyboard, or another apparatus through which a user can provide a user input.

The terminal device 102 may further include a communication interface 123, and the terminal device 102 may be communicatively connected to the server 130 through the communication interface 123. The server 130 may include a communication interface 133, and the terminal device 102 may be communicatively connected to the communication interface 133 of the server 130 through the communication interface 123, to implement data exchange between the terminal device 102 and the server 130.

The server 130 may include a processor 132 and a memory 134. The processor 132 may be any suitable processing device (for example, a processor core, a microprocessor, an application-specific integrated circuit (application-specific integrated circuit, ASIC), a field programmable gate array (field programmable gate array, FPGA), a controller, or a microcontroller). The memory 134 may include but is not limited to a random access memory (random access memory, RAM), a read-only memory (read-only memory, ROM), an erasable programmable read-only memory (erasable programmable read-only memory, EPROM), a compact disc read-only memory (compact disc read-only memory, CD-ROM), or the like. The memory 134 may store data 136 and an instruction 138 that are executed by the processor 132, so that the server 130 performs an operation.

As described above, the memory 134 may store one or more machine learning models 140. For example, the model 140 may be or may additionally include various machine learning models. For example, the machine learning model includes a neural network or another multi-layer nonlinear model. For example, the neural network includes a feedforward neural network, a deep neural network, a recurrent neural network, and a convolutional neural network.

It should be understood that the model training method in embodiments of this application relates to an AI-related operation. When an AI operation is performed, an instruction execution architecture of the terminal device and the server is not limited to the architecture of the processor and the memory shown in FIG. 2. A system architecture according to an embodiment of this application is described in detail below with reference to FIG. 3.

FIG. 3 is a diagram of a system architecture according to an embodiment of this application. As shown in FIG. 3, the system architecture 500 includes an execution device 510, a training device 520, a database 530, a client device 540, a data storage system 550, and a data collection system 560.

The execution device 510 includes a calculation module 511, an I/O interface 512, a preprocessing module 513, and a preprocessing module 514. The calculation module 511 may include a target model/rule 501, and the preprocessing module 513 and the preprocessing module 514 are optional.

The data collection device 560 is configured to collect a training sample. After collecting the training sample, the data collection device 560 stores the training sample in the database 530.

The training device 520 may train a to-be-trained neural network (for example, an encoder or a decoder in embodiments of this application) based on the training sample maintained in the database 530, to obtain a target model/rule 501.

It should be noted that in actual application, the training sample maintained in the database 530 is not necessarily collected by the data collection device 560, and may be received from another device. In addition, it should be noted that the training device 520 does not necessarily train the target model/rule 501 completely based on the training sample maintained in the database 530, and may perform model training by obtaining a training sample from a cloud or another place. The foregoing descriptions should not be construed as a limitation on this embodiment of this application.

The target model/rule 501 obtained through training by the training device 520 may be applied to different systems or devices, for example, applied to the execution device 510 shown in FIG. 3. The execution device 510 may be a terminal, for example, a mobile phone terminal, a tablet computer, a notebook computer, an augmented reality (augmented reality, AR)/virtual reality (virtual reality, VR) device, or an in-vehicle terminal; or may be a server or the like.

In FIG. 3, an input/output (input/output, I/O) interface 512 is configured in the execution device 510 for data exchange with an external device. A user may input data to the I/O interface 512 by using the client device 540, or the execution device 510 may automatically collect input data.

The preprocessing module 513 and the preprocessing module 514 are configured to perform preprocessing based on the input data received by the I/O interface 512. It should be understood that the preprocessing module 513 and the preprocessing module 514 may not exist, or there may be only one preprocessing module. When the preprocessing module 513 and the preprocessing module 514 do not exist, the calculation module 511 may be directly used to process the input data.

When the execution device 510 preprocesses the input data, or when the calculation module 511 of the execution device 510 performs related processing such as calculation, the execution device 510 may invoke data, code, and the like in the data storage system 550 for corresponding processing, or may store, into the data storage system 550, data, instructions, and the like obtained through corresponding processing.

Finally, the I/O interface 512 provides a processing result for the client device 540, to provide the processing result for the user, or perform a control operation based on the processing result.

In the case shown in FIG. 3, the user may manually give input data, and "manually giving the input data" may be operated on an interface provided by the I/O interface 512. In another case, the client device 540 may automatically send the input data to the I/O interface 512. If it is required that the client device 540 needs to obtain authorization from the user to automatically send the input data, the user may set corresponding permission in the client device 540. The user may view, on the client device 540, a result output by the execution device 510. The result may be specifically presented in a specific manner of displaying, a sound, an action, or the like. The client device 540 may also be used as a data collection end, to collect, as new sample data, input data input to the I/O interface 512 and an output result output from the I/O interface 512 that are shown in the figure, and store the new sample data into the database 530. Certainly, the client device 540 may alternatively not perform acquisition. Instead, the I/O interface 512 directly stores, in the database 530 as new sample data, the input data input to the I/O interface 512 and the output result output from the I/O interface 512 that are shown in the figure.

It should be noted that FIG. 3 is merely a diagram of a system architecture according to an embodiment of this application. A position relationship between a device, a component, a module, and the like shown in the figure does not constitute any limitation. For example, in FIG. 3, the data storage system 550 is an external memory relative to the execution device 510. In another case, the data storage system 550 may alternatively be disposed in the execution device 510. It should be understood that the execution device 510 may be deployed in the client device 540.

Details from a perspective of model training are as follows.

In embodiments of this application, the training device 520 may obtain code stored in a memory (which is not shown in FIG. 3, and may be integrated into the training device 520 or separately deployed from the training device 520), to implement steps related to model training in embodiments of this application.

In this embodiment of this application, the training device 520 may include hardware circuits (for example, an application-specific integrated circuit (application-specific integrated circuit, ASIC), a field-programmable gate array (field-programmable gate array, FPGA), a general-purpose processor, a digital signal processor (digital signal processor, DSP), a microprocessor, or a microcontroller), or a combination thereof. For example, the training device 520 may be a hardware system having an instruction execution function, for example, a CPU or a DSP, a hardware system having no instruction execution function, for example, an ASIC or an FPGA, or a combination of the foregoing hardware system having no instruction execution function and the foregoing hardware system having an instruction execution function.

It should be understood that the training device 520 may be a combination of a hardware system having no instruction execution function and a hardware system having an instruction execution function. Some of the steps related to model training provided in embodiments of this application may be implemented by the hardware system having no instruction execution function in the training device 520. This is not limited herein.

Embodiments of this application relate to massive application of a neural network. Therefore, for ease of understanding, the following first describes terms and concepts related to the neural network in embodiments of this application.

(1) Neural network

The neural network may include a neuron. The neuron may be an operation unit that uses xs (namely, input data) and an intercept of 1 as an input. An output of the operation unit may be as follows:

$$h_{W,b}\left(x\right) = f\left(W^{T}x\right) = f(\sum\nolimits_{s=1}^{n} W_{s}x_{s} + b).$$

Herein, s=1, 2, ..., and n. n is a natural number greater than 1. $W_{s}$ is a weight of $x_{s}$. b is a bias of the neuron. f is an activation function (activation function) of the neuron, and is used to introduce a nonlinear characteristic into the neural network, to convert an input signal in the neuron into an output signal. The output signal of the activation function may be used as an input of a next convolutional layer, and the activation function may be a sigmoid function. The neural network is a network formed by connecting a plurality of single neurons together. To be specific, an output of one neuron may be an input to another neuron. An input of each neuron may be connected to a local receptive field of a previous layer to extract a feature of the local receptive field. The local receptive field may be a region including several neurons.

(2) Deep neural network

The deep neural network (Deep Neural Network, DNN), also referred to as a multi-layer neural network, may be understood as a neural network having many hidden layers. The "many" herein does not have a special measurement standard. The DNN is divided based on positions of different layers, and a neural network in the DNN may be divided into three types: an input layer, a hidden layer, and an output layer. Generally, a first layer is the input layer, a last layer is the output layer, and a middle layer is the hidden layer. Layers are fully connected. To be specific, any neuron at an $i^{th}$ layer is necessarily connected to any neuron at an $(i+1)^{th}$ layer. Although the DNN seems to be complex, the DNN is actually not complex in terms of work at each layer, and is simply expressed as the following linear relationship expression: $\vec{y} = \alpha(W\vec{x} + \vec{b})$. Herein, $\vec{x}$ is an input vector, $\vec{y}$ is an output vector, $\vec{b}$ is an offset vector, W is a weight matrix (also referred to as a coefficient), and $\alpha$ is an activation function. At each layer, such a simple operation is performed on the input vector $\vec{x}$, to obtain the output vector $\vec{y}$. Because the DNN has a large quantity of layers, a quantity of coefficients W and a quantity of offset vectors b are also large. Definitions of these parameters in the DNN are as follows: The coefficient W is used as an example. It is assumed that in a DNN having three layers, a linear coefficient from a $4^{th}$ neuron at a $2^{nd}$ layer to a $2^{nd}$ neuron at a $3^{rd}$ layer is defined as $W_{24}^{3}$ . The superscript 3 represents a layer at which the coefficient W is located, and the subscript corresponds to an output third-layer index 2 and an input second-layer index 4. In conclusion, a coefficient from a $k^{th}$ neuron at an $(L-1)^{th}$ layer to a $j^{th}$ neuron at an $L^{th}$ layer is defined as $W_{jk}^{L}$ . It should be noted that the input layer does not have the parameter W. In the deep neural network, more hidden layers make the network more capable of describing a complex case in the real world. Theoretically, a model with more parameters has higher complexity and a larger "capacity". It indicates that the model can complete a more complex learning task. Training the deep neural network is a process of learning a weight matrix, and a final objective of the training is to obtain a weight matrix of all layers of the trained deep neural network (a weight matrix formed by vectors W at many layers).

(3) Reinforcement learning (reinforcement learning, RL), also referred to as reward learning, evaluation learning, or enhancement learning, is one of the paradigms and methodologies of machine learning, and is used to describe and resolve a problem that an agent (agent) learns a policy to maximize a return or achieve a specific objective in a process of interacting with an environment.

A common model of reinforcement learning is a standard Markov decision process (Markov decision process, MDP). Reinforcement learning can be classified into model-based reinforcement learning (model-based RL), model-free reinforcement learning (model-free RL), active reinforcement learning (active RL), and passive reinforcement learning (passive RL). Variants of reinforcement learning include reverse reinforcement learning, hierarchical reinforcement learning, and reinforcement learning for partially observable systems. An algorithm used to resolve a reinforcement learning problem can be divided into two types: a policy search algorithm and a value function (value function) algorithm. A deep learning model can be used in the reinforcement learning, to form deep reinforcement learning.

(4) Loss function

In a process of training the deep neural network, because it is expected that an output of the deep neural network is as close as possible to a predicted value that is actually expected, a predicted value of a current network and a target value that is actually expected may be compared, and then a weight vector of each layer of the neural network is updated based on a difference between the predicted value and the target value (certainly, there is usually an initialization process before a first update, that is, preconfiguring parameters for all layers of the deep neural network). For example, if the predicted value of the network is large, the weight vector is adjusted to decrease the predicted value, and adjustment is continuously performed, until the deep neural network can predict the target value that is actually expected or a value that is very close to the target value that is actually expected. Therefore, "how to obtain a difference between the predicted value and the target value through comparison" needs to be predefined. This is a loss function (loss function) or an objective function (objective function). The loss function and the objective function are important equations that measure the difference between the predicted value and the target value. The loss function is used as an example. A higher output value (loss) of the loss function indicates a larger difference. Therefore, training of the deep neural network is a process of minimizing the loss as much as possible.

(5) Back propagation algorithm

The convolutional neural network may correct a value of a parameter in an initial super-resolution model in a training process according to an error back propagation (back propagation, BP) algorithm, so that an error loss of reconstructing the super-resolution model becomes smaller. Specifically, an input signal is transferred forward until an error loss occurs at an output, and the parameter in the initial super-resolution model is updated based on back propagation error loss information, to converge the error loss. The back propagation algorithm is an error-loss-centered back propagation motion intended to obtain a parameter, such as a weight matrix, of an optimal super-resolution model.

(6) Reinforcement learning model

Reinforcement learning (reinforcement learning, RL), also referred to as reward learning, evaluation learning, or enhancement learning, is one of the paradigms and methodologies of machine learning, and is used to describe and resolve a problem that an agent (agent) learns a policy to maximize a return or achieve a specific objective in a process of interacting with an environment.

A common model of reinforcement learning is a standard Markov decision process (Markov decision process, MDP). Reinforcement learning can be classified into model-based reinforcement learning (model-based RL), model-free reinforcement learning (model-free RL), active reinforcement learning (active RL), and passive reinforcement learning (passive RL). Variants of reinforcement learning include reverse reinforcement learning, hierarchical reinforcement learning, and reinforcement learning for partially observable systems. An algorithm used to resolve a reinforcement learning problem can be divided into two types: a policy search algorithm and a value function (value function) algorithm. A deep learning model can be used in the reinforcement learning, to form deep reinforcement learning.

Personalized learning aims to provide customized learning content for different users based on their characteristics and requirements. In an existing learning content recommendation scenario, a complete learning path (or may be referred to as a learning order of knowledge points) may be recommended to students at the beginning of recommendation. For example, a university recommends a learning order of courses arranged for the students.

In an existing learning path planning algorithm, content-based filtering or collaborative filtering is mainly used to search for and reconstruct a user behavior sequence. In this method, users are clustered and grouped based on user characteristics by using a clustering algorithm. In this way, paths used by users in a same group for learning can be used as candidate recommendation paths. Then, a model is trained to estimate performance of these paths, to filter out paths with poor learning effect. Finally, a matching degree between a candidate path and a target user is calculated based on factors such as the user characteristics, knowledge point features, and path composition, and the most suitable path is selected and recommended to the user. In this method, although the learning path can be quickly recommended, the path recommended in this method can only be derived from a path used by another user for learning in the past. This makes it difficult to ensure a personalization degree of the recommended path and learning effect.

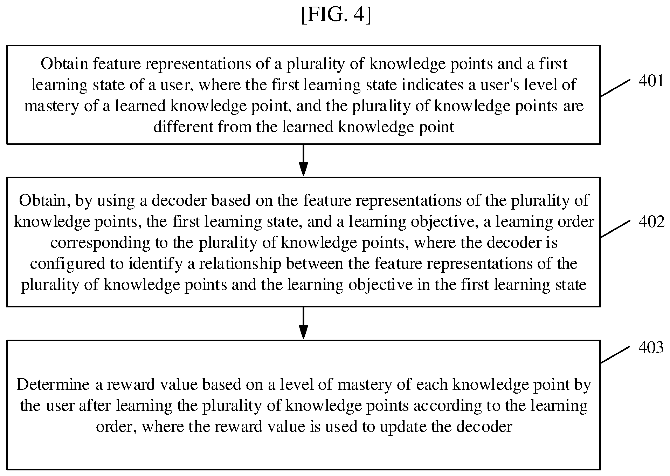

To resolve the foregoing problem, FIG. 4 is a flowchart of a data processing method according to an embodiment of this application. As shown in FIG. 4, the data processing method provided in this embodiment of this application includes the following steps.

401: Obtain feature representations of a plurality of knowledge points and a first learning state of a user, where the first learning state indicates a user's level of mastery of a learned knowledge point, and the plurality of knowledge points are different from the learned knowledge point.

Step 401 may be performed by a training device (for example, the training device may be a terminal device or a server). For details, refer to descriptions in the foregoing embodiment. Details are not described herein again.

In a possible implementation, obtaining the feature representations of the plurality of knowledge points includes: obtaining the feature representations of the plurality of knowledge points based on information about the plurality of knowledge points by using an encoder. In other words, the feature representations of the plurality of knowledge points may be obtained by performing feature extraction on the information about the plurality of knowledge points by using the encoder.

The information about the knowledge points may be feature information used to describe the knowledge points (the knowledge points may also be referred to as concepts in embodiments of this application). For example, in the field of mathematics, the knowledge points may be a specific chapter in a course. For another example, the knowledge points may alternatively be a specific course.

In a possible implementation, a requirement of a user may be obtained. The requirement is that the user needs to achieve a specific learning objective, for example, maximize a level of mastery of a specific course (or knowledge points). In this case, the information about the plurality of knowledge points may be information about each chapter in the course (or a chapter related to the knowledge points).

In a possible implementation, the learning objective may be automatically determined. For example, the learning objective may be maximizing a user's level of mastery of the plurality of knowledge points. For example, the learning objective may be enabling the user to obtain a better score in a test including the plurality of knowledge points.

In a possible implementation, the feature representations of the plurality of knowledge points may be obtained based on the information about the plurality of knowledge points by using the encoder.

In a possible implementation, the encoder includes a first network and a second network. The first network is an attention mechanism-based neural network, and the second network includes an MLP network. A first feature representation and the second feature representation of the plurality of knowledge points may be obtained based on the information about the plurality of knowledge points by using the first network and the second network respectively. Fusion is performed on the first feature representation and the second feature representation to obtain the feature representations. Optionally, the fusion is concatenation (concat).

The first network may exchange information between the plurality of knowledge points, to identify correlation between the knowledge points. An over-smoothing problem may occur in an attention mechanism in such a complex environment with sparse features. To be specific, correlation between concepts is over-focused, while unique features of the concepts are ignored. The second network may identify unique information of each knowledge point.

In a possible implementation, the second network further includes an average pooling network connected in parallel with the MLP network.

The following provides a specific illustration of the encoder.

In a possible implementation, for each discretely represented concept $s_i$ (the concept may also be referred to as a knowledge point) in S, an embedding layer may be used to obtain a continuous representation $x_{s_i}$ of the concept. Certainly, such an embedding representation can only reflect an independent feature of the concept, but cannot reflect correlation between concepts. Therefore, a function $f^e$ is required in this embodiment of this application to capture correlation between concepts in S, and fuse the correlation into concept representations to obtain a global feature:

$$E_s = f_e\ (X_s), X_s = [x_{s1},\ x_{s2}, \dots, x_{sm}]^T.$$

In terms of implementation of the function $f_e$, on one hand, a self-attention mechanism is used to capture the correlation between the concepts:

$$E_s^a = softmax\left(\frac{QK^T}{\sqrt{d}}\right)V.$$

Herein, Q, K, or V is a linear transform of $X_s$, and d is a transformed dimension. On the other hand, an over-smoothing problem may occur in a pure attention mechanism in such a complex environment with sparse features. To be specific, the correlation between the concepts is over-focused, while unique features of the concepts are ignored. Therefore, both a multilayer perceptron (MLP) and an average pooling (average pooling) mechanism are used to retain enough information about the concept:

$$E_S^m = E^m + \frac{\sum_i^m e_i^m}{m}, E^m = MLP(X_S).$$

$f^m$ is implemented as one MLP. An accurate global representation is obtained by combining the two:
$$E_s = [E_s^a, E_s^m].$$

In the foregoing manner, not only the correlation between the concepts is explored, but also the features of the concepts are retained.

An idea of this application is as follows: When a learning order of a plurality of knowledge points is determined, a learning state of the user is used as an environment in reinforcement learning, a knowledge point is used as a control quantity, and a learning objective is used as a control objective, to sequentially obtain a knowledge point at each position in the learning order. Each time a knowledge point at a position is determined, the knowledge point may be used as a learned knowledge point of the user to update the learning state of the user.

In a possible implementation, step 401 may be an intermediate process of determining the learning order. The plurality of knowledge points may be candidate knowledge points whose positions in the learning order have not been determined. The first learning state may be related to a knowledge point that has been determined in the learning order. For example, a preset model may be used to determine a user's level of mastery of various knowledge points after learning knowledge points whose learning order has been determined. The level of mastery may be represented by a probability that the user correctly answers questions related to the knowledge points.

In a possible implementation, the first learning state may be obtained, and the first learning state indicates a user's level of mastery of a learned knowledge point. For example, the first learning state may indicate, but is not limited to a user's level of mastery of knowledge points in a determined learning order.

402: Obtain, by using a decoder based on the feature representations of the plurality of knowledge points, the first learning state, and a learning objective, a learning order corresponding to the plurality of knowledge points, where the decoder is configured to identify a relationship between the feature representations of the plurality of knowledge points and the learning objective in the first learning state.

In a possible implementation, after the feature representations of the plurality of knowledge points are obtained, the learning order corresponding to the plurality of knowledge points may be obtained by using the decoder based on the feature representations. The learning order may include a plurality of positions, and each position corresponds to one knowledge point.

In a possible implementation, when the learning order is determined by using the decoder based on the feature representations, a knowledge point at each position in a path may be sequentially determined. Each time a knowledge point at a position is determined, a knowledge point at a current position to be determined may be obtained by using a relationship between a user's level of mastery of a determined knowledge point on the path (which can represent knowledge learned by the user, for example, the first learning state), a feature of a candidate knowledge point (that is, a feature of a knowledge point that is not determined on the path), and the learning objective (which may be specified by the user or may be determined by a system). By analogy, each knowledge point on the path may be obtained sequentially. In a step-by-step recommendation scenario, the model can obtain an immediate feedback at the end of each step. These rich feedbacks allow a more complex algorithm (such as RL) to be applied to recommend a path.

Specifically, when a knowledge point at a current position to be determined is obtained, a probability that each candidate knowledge point is at the current position may be determined, and then the knowledge point at the current position may be determined in a sampling manner. A higher probability indicates a larger possibility of being sampled.

In a possible implementation, specifically, a knowledge point at each position in the learning order may be sequentially obtained by using the decoder based on the feature representations. When determining a knowledge point at an $N^{th}$ position in the learning order, the decoder is configured to identify a relationship between feature representations of other knowledge points different from knowledge points at N-1 positions in the plurality of knowledge points and the learning objective in the first learning state.

In a possible implementation, the decoder includes an LSTM and an attention layer. Specifically, the feature representations of the other knowledge points different from the knowledge points at the N-1 positions in the plurality of knowledge points and feature representations of the determined knowledge points at the N-1 positions may be processed by using the LSTM, to obtain target feature representations of the other knowledge points different from the knowledge points at the N-1 positions in the plurality of knowledge points. Processing is performed based on the target feature representations and the learning objective by using the attention layer, to obtain a probability that each of the other knowledge points is at the $N^{th}$ position. Based on the probability that each of the other knowledge points is at the $N^{th}$ position, the knowledge point at the $N^{th}$ position is determined through sampling.

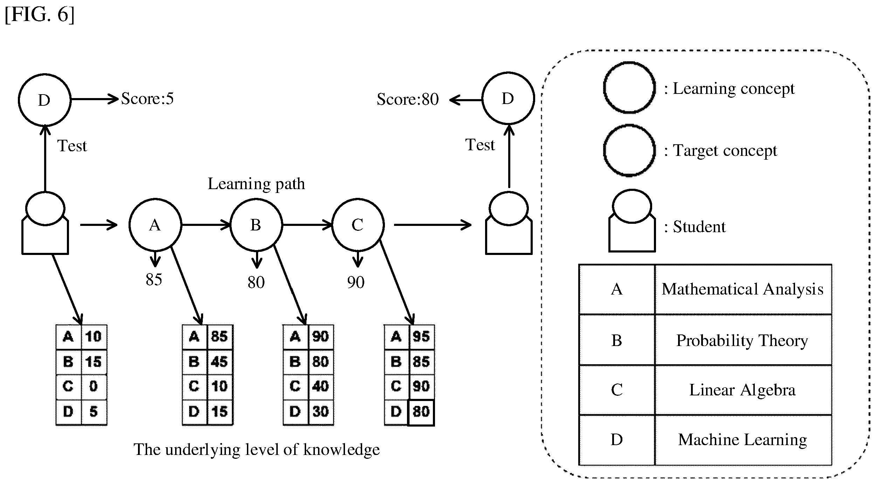

In a possible implementation, the user expects the system to provide a learning order of some knowledge points, so that a level of mastery of some target concepts (that is, learning objectives) can be improved as much as possible after these concepts are learned in sequence. Specifically, the problem needs to be formalized as follows. First, the following symbols are defined: a historical learning record $H = \{h_1, h_2, \cdots, h_k\}$ of the user, where $h_t = \{ct, yt\}$ includes a concept learned by the user at the moment and a learning status (right or wrong); a candidate concept set $S = \{s_1, s_2, \cdots, s_m\}$ used to form a path; a target concept set $T = \{t_1, t_2, \cdots\}$ that the user expects to learn; a final recommended path $\pi = \{\pi_1, \pi_2, \cdots, \pi_n\}$; levels of mastery, $E_b$ and $E_e$, of T by the user before and after learning according to the path; an upper limit $E_{sup}$ of a level of mastery of T; final quantified learning effect $E_T = \dfrac{E_e - E_b}{E_{sup} - E_b}$; and learning performance $Y_\pi = \{y_{\pi_1}, y_{\pi_2}, \cdots, y_{\pi_n}\}$ of the user on the learning path $\pi$. In this case, a learning path recommendation task may be defined as: a historical learning sequence H of a given user, the target concept set T, and the candidate concept set S. This task requires selecting n concepts from S without repetition and arranging them into the path $\pi$ to be recommended to the user for learning. A final objective is to maximize learning effect $E_T$. FIG. 6 shows a general scenario of a learning path.

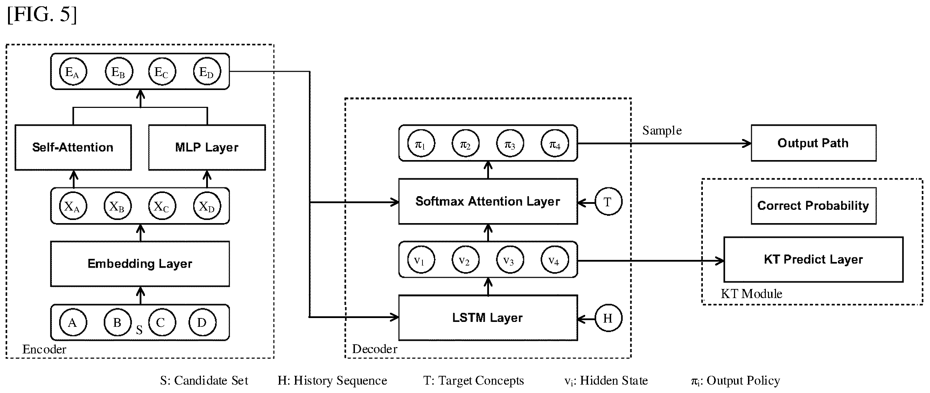

FIG. 5 is a diagram of an architecture of a model according to an embodiment of this application. After a concept representation $E_S$ (that is, the feature representations of the plurality of knowledge points in the foregoing embodiment) is obtained, the concept representation may be input into the decoder. After a learning history sequence and target concepts (for evaluation, for example, the target concepts may be the learning objectives described above) of the user are comprehensively considered, the recommended path and a corresponding probability are output:

$$\pi, P = f_d(E_s, H, T).$$

In a possible implementation, for implementation of $f_d$, one LSTM (denoted as *g*) is designed to track a user status. An initial state $v_0$ of *g* can be obtained from H:

$$v_0 = g([x_{c_1}; y_1]W_h, [x_{c_2}; y_2]W_h, \cdots, [x_{c_k}; y_k]W_h).$$

In this case, in a subsequent $i^{th}$ step of recommendation, i - 1 concepts $\pi_{<i} = \{\pi_1, \pi_2, \cdots, \pi_{i-1}\}$ are recommended, and the user status is $v_{i-1}$. In this case, current probability distribution is calculated as follows:

$$b_i^j = w_1^T(W_1 v_{i-1} + W_2 e_s^j + W_3 x_T + b),$$

$$P(\hat{\pi}_i = s_j) = \begin{cases} e^{b_i^j} / \sum_{s_k \in S/\pi_{<i}} e^{b_i^k}, & \text{if } s_j \notin \pi_{<i} \\ 0, & \text{otherwise.} \end{cases}$$

It can be seen that a relationship between a student status, the target concepts, and candidate concepts is comprehensively considered, to calculate a score of each candidate concept and display the score in a form of probability. According to the probability distribution $P(\hat{\pi}_i)$, a concept $\pi_i$ at a current position i may be obtained through sampling. Then, the user status is updated accordingly, to obtain $v_i = g(e_s^{\pi_i}, v_{i-1})$. In this way, a complete path $\pi = \{\pi_1, \cdots, \pi_n\}$ and a corresponding probability $P = \{p_{\pi_1}, \cdots, p_{\pi_n}\}$ may be obtained.

403: Determine a reward value based on a level of mastery of each knowledge point by the user after learning the plurality of knowledge points according to the learning order, where the reward value is used to update the decoder.

In a possible implementation, the reward value may be determined based on the level of mastery of each knowledge point by the user after learning the plurality of knowledge points according to the learning order and a degree of completion of the learning objective by the user after learning the plurality of knowledge points according to the learning order.

After the recommendation ends, a question answering status of the user on the path is predicted, and such information is included in the model as an optimization objective, that is, $p_{\pi_i}^y = \text{Sigmoid}(f^y(v_i))$, where $f^y$ may be implemented as an MLP.

As described above, two probabilities are obtained: the probability P of generating the path $\pi$ and the probability $p_{\pi_i}^y$ of correctly answering each concept in $\pi$ by the user. Two loss functions may be designed based on this. Learning effect $E_T$ of a student on the path may be used as a reward in reinforcement learning. Based on this, a policy gradient may be applied to calculate a first loss:

$$L_\theta = -E_T \log \prod_i^n p_{\pi_i} = -E_T \sum_i^n \log p_{\pi_i}.$$

In addition, a cross entropy between a predicted probability $p_{\pi_i}^y$ and an actual feedback $y_{\pi_i}$ of the user may be calculated as a second loss:

$$L_y = -\sum_i^n (y_{\pi_i} \log + (1 - y_{\pi_i}) \log(1 - p_{\pi_i}^y)).$$

FIG. 5 shows an overall framework of an embodiment of this application. As shown in FIG. 5, an encoder is included to model correlation between candidate learning concepts, to obtain their global representation. Then, in the decoder module, a recursive neural network LSTM is used to predict and model a knowledge state of the user in a learning process, and correlation between learning concepts and target concepts is calculated by using an attention mechanism, to determine a concept best suited for the position. Additionally, based on the knowledge state obtained in the decoder, further predictions are made about user's answers to the learning concepts. At the end of the learning path, various obtained feedbacks are passed to the model to optimize parameters.

In this embodiment of this application, when the learning order of the knowledge points is determined, the learning order of the plurality of knowledge points is determined in a sequence generation manner in a current learning state of the user, instead of using a complete learning order as a granularity, and a sequence is not necessarily selected from a large quantity of learning orders. In this way, a finally determined learning order is not limited to a path used by another user for learning in the past, thereby improving a personalization degree of a learning path and learning effect. When the reward value is constructed, only a level of mastery of knowledge points by the user after learning the knowledge points according to a determined order needs to be obtained, and a more complex training sample is not required.

To prove effectiveness and robustness of this embodiment of this application, this embodiment is compared with the following five methods: a random method (Random), that is, randomly selecting n concepts from S and randomly forming a path; and a rule-based method (Rule-based), where a simulator evaluates effect for the target concepts in the case of separately learning each concept in S, and then sorts top-n concepts to form a path. Details may be shown in Table 1, where * may indicate that a significance test is p < 0.001 in comparison with an optimal baseline.

MPC: Model predictive control in reinforcement learning is combined with a KT technology. At each step, effect of several random search paths is predicted, and a current action is determined accordingly.

GRU4Rec: GRU4Rec is a classic sequential recommendation model, and predicts probability distribution of a next concept after a past sequence is input. It is noted that GRU4Rec is trained and learns based on an original dataset.

DQN: The DQN a classic reinforcement learning model. In this case, a DKT model is pre-trained based on original data, to generate a state required in the DQN.

Table 1

| | | ASSIST09 | | | | Junyi | | | |
|---|---|---|---|---|---|---|---|---|---|
| | Model | p=0 | p=1 | p=2 | p=3 | p=0 | p=1 | p=2 | p=3 |
| DKT | Random | 0.0707 | 0.0995 | 0.1159 | 0.1290 | -0.0854 | -0.0054 | -0.0091 | -0.0075 |
| | Rule-based | 0.1675 | 0.2070 | 0.1950 | 0.4233 | 0.0525 | 0.0969 | 0.1115 | 0.3481 |
| | MPC | 0.0834 | 0.1163 | 0.1293 | 0.1399 | -0.0584 | 0.0176 | 0.0121 | 0.0209 |
| | GRU4Rec | 0.0862 | 0.1505 | 0.1682 | 0.0755 | -0.0390 | 0.0112 | 0.0152 | -0.1394 |
| | DQN | 0.1215 | 0.1767 | 0.0723 | 0.2949 | 0.0713 | 0.0234 | -0.0118 | 0.2023 |
| | **SRC** | **0.3135*** | **0.2971'** | **0.2345'** | **0.5567*** | **0.2555*** | **0.1761*** | **0.1508*** | **0.5809*** |
| CoKT | Random | 0.0858 | 0.0932 | 0.0917 | 0.0968 | -0.1022 | -0.0700 | -0.0664 | -0.0773 |
| | Rule-based | 0.0928 | 0.1010 | 0.0960 | 0.0990 | -0.0988 | -0.0580 | -0.0503 | -0.0522 |
| | MPC | 0.1145 | 0.1056 | 0.0918 | 0.1035 | -0.0568 | -0.0699 | -0.0823 | -0.0576 |
| | GRU4Rec | 0.1334 | 0.1242 | 0.1240 | 0.0589 | -0.0333 | -0.0675 | -0.0659 | -0.1385 |
| | DQN | 0.1403 | 0.1281 | 0.0710 | 0.1253 | -0.0145 | -0.0524 | -0.0691 | 0.0781 |
| | **SRC** | **0.1885*** | **0.1559*** | **0.1574*** | **0.2340*** | **0.0569*** | **-0.0238*** | **-0.0360*** | **0.1709*** |

The table shows comparison of performance of different models in various scenarios. An evaluation indicator is $E_T$ evaluated by the simulator, that is, improvement effect of students. A path length is 20. The following may be learned.

Embodiments of this application outperforms all baselines under any condition. This is because the model in embodiments of this application fully simulates the correlation between the concepts and effectively utilizes the feedbacks. In DKT, the rule-based method usually achieves the best performance compared with other baselines. However, in CoKT, performance of this method is poor, and in most cases, the rule-based method is close to the random method. In addition, in CoKT, even $E_T$ of an SRC model is a negative value in many cases, and a maximum value of $E_T$ achieved through learning by various models is also less than a value in DKT. This may reflect a difference in nature between two simulators, such as consideration of relationships between concepts and a rate of knowledge forgetting. In conclusion, learning in CoKT appears to be more challenging. GRU4Rec performs well in some cases. This indicates that an original learning order of the students has specific value, and can reflect a relationship between concepts to some extent. Performance of GRU4Rec is even worse than that of the random method, except in the case of $p$ = 3. This may be because this scenario of selecting an optimal path from all concepts requires a wider combination, and such a paradigm cannot be extracted from limited original data. The DQN performs well in most cases, and is basically weaker than the rule-based method only in the DKT environment among the baselines. This reflects superiority of an interaction-based reinforcement learning method in this case. The DQN performs poorly in the case of $p$ = 2. This may be because such a case is more complex and exploration of the DQN is insufficient.

Similar to Example 1, in a real service dataset, experiment results of different path planning methods in different scenarios may be shown in Table 2.

Table 2

| | Model | p=0 | p=1 | p=2 | p=3 |
|---|---|---|---|---|---|
| DKT | Rule-based | 0.0319 | 0.2092 | 0.1622 | 0.9507 |
| | Random | -0.8202 | -0.7088 | -0.8098 | -0.8885 |
| | DQN | 0.4495 | -0.2504 | -0.6021 | 0.8800 |
| | SRC | **0.9319*** | **0.4701*** | **0.2842*** | **0.9861*** |
| CoKT | Rule-based | -0.0445 | -0.0631 | -0.0819 | -0.0595 |
| | Random | -0.0637 | -0.0848 | -0.0832 | -0.0548 |
| | DQN | 0.0101 | -0.0092 | -0.0215 | -0.0504 |
| | SRC | **0.1288*** | **-0.0042*** | **-0.0159*** | **0.2577*** |

Similarly, an SRC model is superior to all baselines under any condition, which further verifies effectiveness of the SRC model.

In an implementation example of a more complex industrial dataset, embodiments of this application have also achieved excellent results. This is also because in comparison with the conventional technology, in embodiments of this application, a concept-aware encoder module is designed to mine correlation between concepts and obtain a global representation of candidate concepts. In the decoding module, an optimal concept is recommended at each position with reference to an attention mechanism and a policy gradient method. A KT model is introduced to estimate a difference between a student's mastery probability and a historical answer, constructing an auxiliary feedback task. Recommendation accuracy is greatly improved.

For beneficial effects of key technical points in the SRC model, in this embodiment, an ablation experiment is performed on a public dataset to verify effectiveness of modules corresponding to different technical points. Results are shown in Table 3.

Table 3

| Model | p=0 | p=1 | p=2 | p=3 |
|---|---|---|---|---|
| $SRC_M^- KT$ removed | 0.2881 | 0.2878 | 0.2276 | 0.5391 |
| $SRC_M$ | 0.3098 | 0.2954 | 0.2311 | 0.5405 |
| $SRC_A^-$ | 0.2234 | 0.2018 | 0.1587 | 0.4539 |
| $SRC_A$ | 0.2943 | 0.2891 | 0.2301 | 0.5378 |
| $SRC^-$ | 0.3025 | 0.2910 | 0.2291 | 0.5290 |
| $SRC$ | 0.3135* | 0.2971* | 0.2345* | **0.5567*** |

Indicators in Table 3 are also learning effect $E_T$. $SRC_A$ and $SRC_M$ respectively represent a case of using only a self-attention mechanism by the encoder of the SRC model and a case of using only an MLP. $SRC^-$ indicates that a KT auxiliary module is not used in a training process. That is, only the loss function $L_\theta$ of the policy gradient is used to optimize a model parameter. First, it can be seen that after the original encoder is replaced, performance of the model degrades regardless of whether the KT module is used. This shows that in SRC, the encoder that combines the self-attention mechanism and the MLP truly has advantages of both. Not only the correlation between the concepts is mined, but also its own features are retained. Then, it is noted that in $SRC_A^-$, after the KT module is removed, performance of the model experiences a substantial decline compared with $SRC_A$, far exceeding the other two cases. In addition, in the experiment, $SRC_A^-$ sometimes experiences non-convergence that has never occurred in other models. That is, in this sparse reward reinforcement learning paradigm, training such a complex network becomes significantly more challenging. Therefore, after the KT module is used, a student feedback in $Y_\pi$ not only brings more information, but also reduces training difficulty of the encoder, thereby greatly improving performance. In SRC and $SRC_M$, there is no encoder training problem. Therefore, performance improvement is not obvious.

An embodiment of this application further provides a data processing method. The method may be implemented based on a model (for example, an encoder and a decoder) trained in the embodiment corresponding to FIG. 4. The method includes the following steps:

obtaining feature representations of a plurality of knowledge points and a first learning state of a user, where the first learning state indicates a user's level of mastery of a learned knowledge point, and the plurality of knowledge points are different from the learned knowledge point; and

obtaining, by using a decoder based on the feature representations of the plurality of knowledge points, the first learning state, and a learning objective, a learning order corresponding to the plurality of knowledge points, where the decoder is configured to identify a relationship between the feature representations of the plurality of knowledge points and the learning objective in the first learning state.

In a possible implementation, obtaining the feature representations of the plurality of knowledge points includes: obtaining the feature representations of the plurality of knowledge points based on information about the plurality of knowledge points by using an encoder, where the encoder includes a first network and a second network, the first network is an attention mechanism-based neural network, and the second network includes an MLP network.

Obtaining the feature representations of the plurality of knowledge points based on the information about the plurality of knowledge points by using the encoder includes:

obtaining a first feature representation and a second feature representation of the plurality of knowledge points based on information about the plurality of knowledge points by using the first network and the second network respectively; and

performing fusion on the first feature representation and the second feature representation to obtain the feature representations.

In a possible implementation, the second network further includes an average pooling network connected in parallel with the MLP network.

In a possible implementation, the fusion is concatenation.

In a possible implementation, obtaining, by using the decoder based on the feature representations, the learning order corresponding to the plurality of knowledge points includes:

sequentially obtaining, by using the decoder based on the feature representations, a knowledge point at each position in the learning order. When determining a knowledge point at an $N^{th}$ position in the learning order, the decoder is configured to identify a relationship between feature representations of other knowledge points different from knowledge points at N-1 positions in the plurality of knowledge points and the learning objective in the first learning state.

In a possible implementation, the decoder includes an LSTM and an attention layer.

Sequentially obtaining, by using the decoder based on the feature representations, the knowledge point at each position in the learning order includes:

processing, by using the LSTM, the feature representations of the other knowledge points different from the knowledge points at the N-1 positions in the plurality of knowledge points and feature representations of the determined knowledge points at the N-1 positions, to obtain target feature representations of the other knowledge points different from the knowledge points at the N-1 positions in the plurality of knowledge points;

performing processing based on the target feature representations and the learning objective by using the attention layer, to obtain a probability that each of the other knowledge points is at the $N^{th}$ position; and

determining, based on the probability that each of the other knowledge points is at the $N^{th}$ position, the knowledge point at the $N^{th}$ position through sampling.

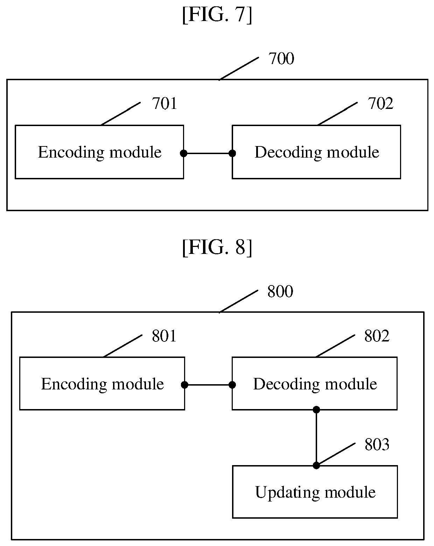

FIG. 7 is a diagram of a structure of a data processing apparatus according to an embodiment of this application. As shown in FIG. 7, the apparatus 700 includes the following modules.

An encoding module 701 is configured to obtain feature representations of a plurality of knowledge points and a first learning state of a user. The first learning state indicates a user's level of mastery of a learned knowledge point, and the plurality of knowledge points are different from the learned knowledge point.

For specific descriptions of the encoding module 701, refer to descriptions of step 401 in the foregoing embodiment. Details are not described herein again.

A decoding module 702 is configured to obtain, by using a decoder based on the feature representations of the plurality of knowledge points, the first learning state, and a learning objective, a learning order corresponding to the plurality of knowledge points. The decoder is configured to identify a relationship between the feature representations of the plurality of knowledge points and the learning objective in the first learning state.

For specific descriptions of the decoding module 702, refer to descriptions of step 402 in the foregoing embodiment. Details are not described herein again.

In a possible implementation, the encoder includes a first network and a second network, the first network is an attention mechanism-based neural network, and the second network includes an MLP network.

The encoding module is specifically configured to:

obtain a first feature representation and the second feature representation of the plurality of knowledge points based on information about the plurality of knowledge points by using the first network and the second network respectively; and

perform fusion on the first feature representation and the second feature representation to obtain the feature representations.

In a possible implementation, the second network further includes an average pooling network connected in parallel with the MLP network.

In a possible implementation, the fusion is concatenation.

In a possible implementation, the decoding module is specifically configured to:

sequentially obtain, by using the decoder based on the feature representations, a knowledge point at each position in the learning order. When determining a knowledge point at an $N^{th}$ position in the learning order, the decoder is configured to identify a relationship between feature representations of other knowledge points different from knowledge points at N-1 positions in the plurality of knowledge points and the learning objective in the first learning state.

In a possible implementation, the decoder includes an LSTM and an attention layer.

The decoding module is specifically configured to:

process, by using the LSTM, the feature representations of the other knowledge points different from the knowledge points at the N-1 positions in the plurality of knowledge points and feature representations of the determined knowledge points at the N-1 positions, to obtain target feature representations of the other knowledge points different from the knowledge points at the N-1 positions in the plurality of knowledge points;

perform processing based on the target feature representations and the learning objective by using the attention layer, to obtain a probability that each of the other knowledge points is at the $N^{th}$ position; and

determine, based on the probability that each of the other knowledge points is at the $N^{th}$ position, the knowledge point at the $N^{th}$ position through sampling.

FIG. 8 is a diagram of a structure of a data processing apparatus according to an embodiment of this application. As shown in FIG. 8, the apparatus 800 includes the following modules.

An encoding module 801 is configured to obtain feature representations of a plurality of knowledge points and a first learning state of a user. The first learning state indicates a user's level of mastery of a learned knowledge point, and the plurality of knowledge points are different from the learned knowledge point.

For specific descriptions of the encoding module 801, refer to descriptions of step 401 in the foregoing embodiment. Details are not described herein again.

A decoding module 802 is configured to obtain, by using a decoder based on the feature representations of the plurality of knowledge points, the first learning state, and a learning objective, a learning order corresponding to the plurality of knowledge points. The decoder is configured to identify a relationship between the feature representations of the plurality of knowledge points and the learning objective in the first learning state.

For specific descriptions of the decoding module 802, refer to descriptions of step 402 in the foregoing embodiment. Details are not described herein again.

An updating module 803 is configured to determine a reward value based on a level of mastery of each knowledge point by the user after learning the plurality of knowledge points according to the learning order, where the reward value is used to update the decoder.

For specific descriptions of the updating module 803, refer to descriptions of step 403 in the foregoing embodiment. Details are not described herein again.

In a possible implementation, the updating module is specifically configured to:

determine the reward value based on the level of mastery of each knowledge point by the user after learning the plurality of knowledge points according to the learning order and a degree of completion of the learning objective by the user after learning the plurality of knowledge points according to the learning order.

In a possible implementation, the encoder includes a first network and a second network, the first network is an attention mechanism-based neural network, and the second network includes an MLP network.

The encoding module is specifically configured to:

obtain a first feature representation and the second feature representation of the plurality of knowledge points based on information about the plurality of knowledge points by using the first network and the second network respectively;

and

perform fusion on the first feature representation and the second feature representation to obtain the feature representations.

In a possible implementation, the second network further includes an average pooling network connected in parallel with the MLP network.

In a possible implementation, the fusion is concatenation.

In a possible implementation, the decoding module is specifically configured to:

sequentially obtain, by using the decoder based on the feature representations, a knowledge point at each position in the learning order. When determining a knowledge point at an $N^{th}$ position in the learning order, the decoder is configured to identify a relationship between feature representations of other knowledge points different from knowledge points at N-1 positions in the plurality of knowledge points and the learning objective in the first learning state.

In a possible implementation, the decoder includes an LSTM and an attention layer.

The decoding module is specifically configured to:

process, by using the LSTM, the feature representations of the other knowledge points different from the knowledge points at the N-1 positions in the plurality of knowledge points and feature representations of the determined knowledge points at the N-1 positions, to obtain target feature representations of the other knowledge points different from the knowledge points at the N-1 positions in the plurality of knowledge points;

perform processing based on the target feature representations and the learning objective by using the attention layer, to obtain a probability that each of the other knowledge points is at the $N^{th}$ position; and

determine, based on the probability that each of the other knowledge points is at the $N^{th}$ position, the knowledge point at the $N^{th}$ position through sampling.

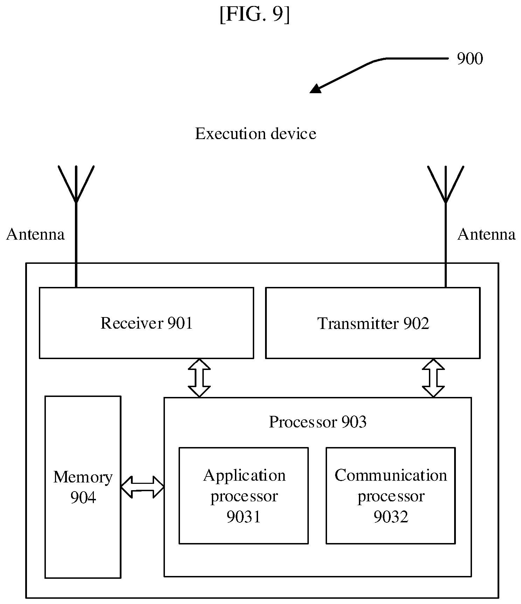

The following describes an execution device provided in an embodiment of this application. FIG. 9 is a diagram of a structure of an execution device according to an embodiment of this application. The execution device 900 may be specifically represented as a mobile phone, a tablet, a notebook computer, a smart wearable device, or the like. This is not limited herein. Specifically, the execution device 900 includes: a receiver 901, a transmitter 902, a processor 903, and a memory 904 (there may be one or more processors 903 in the execution device 900, and one processor is used as an example in FIG. 9). The processor 903 may include an application processor 9031 and a communication processor 9032. In some embodiments of this application, the receiver 901, the transmitter 902, the processor 903, and the memory 904 may be connected through a bus or in another manner.

The memory 904 may include a read-only memory and a random access memory, and provide instructions and data for the processor 903. A part of the memory 904 may further include a non-volatile random access memory (non-volatile random access memory, NVRAM). The memory 904 stores a processor and operation instructions, an executable module or a data structure, a subset thereof, or an extended set thereof. The operation instructions may include various operation instructions for implementing various operations.

The processor 903 controls an operation of the execution device. During specific application, the components of the execution device are coupled together through a bus system. In addition to a data bus, the bus system may further include a power bus, a control bus, a status signal bus, and the like. However, for clear description, various types of buses in the figure are referred to as the bus system.

The methods disclosed in the foregoing embodiments of this application may be applied to the processor 903, or may be implemented by the processor 903. The processor 903 may be an integrated circuit chip and has a signal processing capability. In an implementation process, steps in the foregoing method may be implemented by using a hardware integrated logic circuit in the processor 903, or by using instructions in a form of software. The processor 903 may be a general-purpose processor, a digital signal processor (digital signal processor, DSP), a microprocessor, or a microcontroller. The processor 903 may further include an application-specific integrated circuit (application-specific integrated circuit, ASIC), a field programmable gate array (field programmable gate array, FPGA) or another programmable logic device, a discrete gate or transistor logic device, or a discrete hardware component. The processor 903 may implement or perform the methods, steps, and logic block diagrams disclosed in embodiments of this application. The general-purpose processor may be a microprocessor, or the processor may be any conventional processor or the like. The steps in the methods disclosed with reference to embodiments of this application may be directly performed and completed by a hardware decoding processor, or may be performed and completed by using a combination of hardware in the decoding processor and a software module. A software module may be located in a mature storage medium in the art, such as a random access memory, a flash memory, a read-only memory, a programmable read-only memory, an electrically erasable programmable memory, or a register. The storage medium is located in the memory 904, and the processor 903 reads information in the memory 904, and completes the steps in the foregoing methods in combination with hardware of the processor 903.

The receiver 901 may be configured to receive input digit or character information, and generate a signal input related to setting and function control of the execution device. The transmitter 902 may be configured to the output digit or character information. The transmitter 902 may be further configured to send instructions to a disk group, to modify data in the disk group.

In this embodiment of this application, in one case, the processor 903 is configured to perform the steps of the model obtained according to the data processing method in the embodiment corresponding to FIG. 4.

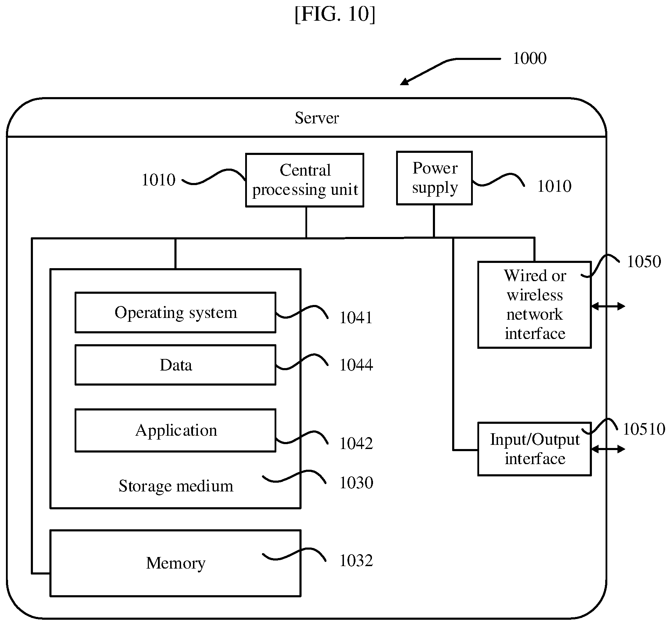

An embodiment of this application further provides a server. FIG. 10 is a diagram of a structure of a server according to an embodiment of this application. Specifically, the server 1000 is implemented by one or more servers. The server 1000 may greatly differ due to different configurations or performance, and may include one or more central processing units (central processing units, CPUs) 1010 (for example, one or more processors), a memory 1032, and one or more storage media 1030 (for example, one or more mass storage devices) that store an application 1042 or data 1044. The memory 1032 and the storage medium 1030 may perform transitory storage or persistent storage. A program stored in the storage medium 1030 may include one or more modules (not shown in the figure), and each module may include a series of instruction operations for the server. Further, the central processing unit 1010 may be configured to: communicate with the storage medium 1030, and perform, on the server 1000, the series of instruction operations in the storage medium 1030.

The server 1000 may further include one or more power supplies 1010, one or more wired or wireless network interfaces 1050, one or more input/output interfaces 10510; or one or more operating systems 1041, for example, Windows ServerTM, Mac OS XTM, UnixTM, LinuxTM, and FreeBSDTM.

In this embodiment of this application, the central processing unit 1010 is configured to perform steps of the data processing method in the embodiment corresponding to FIG. 4.

An embodiment of this application further provides a computer program product including computer-readable instructions. When the computer program product is run on a computer, the computer is enabled to perform steps performed by the foregoing execution device, or the computer is enabled to perform steps performed by the foregoing training device.

An embodiment of this application further provides a computer-readable storage medium. The computer-readable storage medium stores a program used for signal processing. When the program is run on a computer, the computer is enabled to perform steps performed by the foregoing execution device, or the computer is enabled to perform steps performed by the foregoing training device.

The execution device, the training device, or the terminal device provided in embodiments of this application may be specifically a chip. The chip includes a processing unit and a communication unit. The processing unit may be, for example, a processor. The communication unit may be, for example, an input/output interface, a pin, or a circuit. The processing unit may execute computer-executable instructions stored in a storage unit, so that a chip in the execution device performs the model training method described in the foregoing embodiments, or a chip in the training device performs steps related to model training in the foregoing embodiments. Optionally, the storage unit is a storage unit in the chip, for example, a register or a cache. Alternatively, the storage unit may be a storage unit in a wireless access device but outside the chip, for example, a read-only memory (read-only memory, ROM), another type of static storage device that can store static information and instructions, or a random access memory (random access memory, RAM).

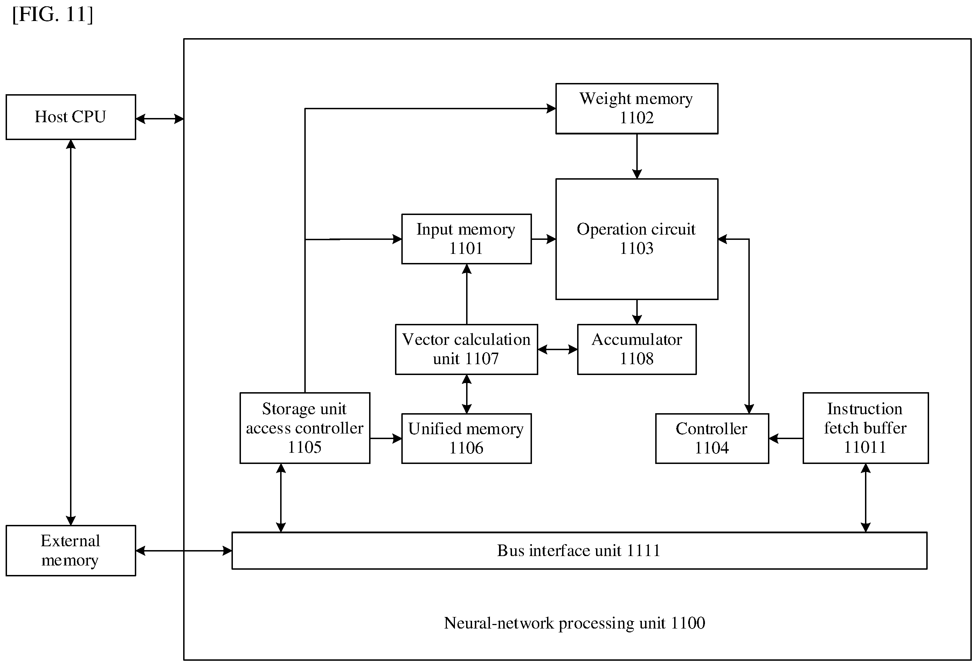

Specifically, FIG. 11 is a diagram of a structure of a chip according to an embodiment of this application. The chip may be represented as a neural-network processing unit NPU 1100. The NPU 1100 is mounted to a host CPU (Host CPU) as a coprocessor, and the host CPU allocates a task. A core part of the NPU is an operation circuit 1103, and a controller 1104 controls the operation circuit 1103 to extract matrix data in a memory and perform a multiplication operation.

In some implementations, the operation circuit 1103 includes a plurality of process engines (Process Engines, PEs) inside. In some implementations, the operation circuit 1103 is a two-dimensional systolic array. The operation circuit 1103 may alternatively be a one-dimensional systolic array or another electronic circuit capable of performing mathematical operations such as multiplication and addition. In some implementations, the operation circuit 1103 is a general-purpose matrix processor.

For example, it is assumed that there is an input matrix A, a weight matrix B, and an output matrix C. The operation circuit fetches, from a weight memory 1102, data corresponding to the matrix B, and caches the data on each PE in the operation circuit. The operation circuit fetches data of the matrix A from an input memory 1101, to perform a matrix operation on the matrix B, and stores an obtained partial result or an obtained final result of the matrix in an accumulator (accumulator) 1108.

A unified memory 1106 is configured to store input data and output data. Weight data is directly transferred to the weight memory 1102 by using a direct memory access controller (Direct Memory Access Controller, DMAC) 1105. The input data is also transferred to the unified memory 1106 by using the DMAC.

A BIU is a bus interface unit, namely, a bus interface unit 1111, and is configured to perform interaction between an AXI bus and the DMAC and between the AXI bus and an instruction fetch buffer (Instruction Fetch Buffer, IFB) 11011.

The bus interface unit (Bus Interface Unit, BIU for short) 1111 is used by the instruction fetch buffer 11011 to obtain instructions from an external memory, and is further used by the direct memory access controller 1105 to obtain original data of the input matrix A or the weight matrix B from the external memory.

The DMAC is mainly configured to transfer input data in the external memory DDR to the unified memory 1106, transfer weight data to the weight memory 1102, or transfer input data to the input memory 1101.

A vector calculation unit 1107 includes a plurality of operation processing units. If required, further processing is performed on an output of the operation circuit, for example, vector multiplication, vector addition, an exponential operation, a logarithmic operation, or a value comparison. The vector calculation unit 1107 is mainly configured to perform network computation at a non-convolutional/fully-connected layer of a neural network, for example, batch normalization (batch normalization), pixel-level summation, and upsampling of a feature plane.

In some implementations, the vector calculation unit 1107 can store a processed output vector in the unified memory 1106. For example, the vector calculation unit 1107 may apply a linear function or a nonlinear function to the output of the operation circuit 1103, for example, perform linear interpolation on a feature plane extracted at a convolutional layer. For another example, the vector calculation unit 1107 may apply a linear function or a nonlinear function to a vector of an accumulated value, to generate an activation value. In some implementations, the vector calculation unit 1107 generates a normalized value, a pixel-level summation value, or both a normalized value and a pixel-level summation value. In some implementations, the processed output vector can be used as an activation input to the operation circuit 1103, for example, used at a subsequent layer in the neural network.

The instruction fetch buffer (instruction fetch buffer) 11011 connected to the controller 1104 is configured to store instructions used by the controller 1104.

The unified memory 1106, the input memory 1101, the weight memory 1102, and the instruction fetch buffer 11011 are all on-chip memories. The external memory is private to a hardware architecture of the NPU.

Any one of the processors mentioned above may be a general-purpose central processing unit, a microprocessor, an ASIC, or one or more integrated circuits for controlling program execution.

In addition, it should be noted that the described apparatus embodiment is merely an example. The units described as separate parts may or may not be physically separate, and parts displayed as units may or may not be physical units, may be located in one position, or may be distributed on a plurality of network units. Some or all of the modules may be selected according to actual needs to achieve the objectives of the solutions of embodiments. In addition, in the accompanying drawings of the apparatus embodiments provided in this application, connection relationships between modules indicate that the modules have communication connections with each other, which may be specifically implemented as one or more communication buses or signal cables.

Based on the description of the foregoing implementations, a person skilled in the art may clearly understand that this application may be implemented by software in addition to necessary universal hardware, or by dedicated hardware, including an application-specific integrated circuit, a dedicated CPU, a dedicated memory, a dedicated component, and the like. Usually, any function implemented by a computer program can be easily implemented by using corresponding hardware. In addition, specific hardware structures used to implement a same function may be various, for example, an analog circuit, a digital circuit, or a dedicated circuit. However, as for this application, software program implementation is a better implementation in most cases. Based on such an understanding, the technical solutions of this application essentially or the part contributing to the prior art may be implemented in a form of a software product. The computer software product is stored in a readable storage medium, such as a floppy disk, a USB flash drive, a removable hard disk, a ROM, a RAM, a magnetic disk, or an optical disc of a computer, and includes several instructions for instructing a computer device (which may be a personal computer, a training device, a network device, or the like) to perform the methods in embodiments of this application.

All or some of the foregoing embodiments may be implemented by using software, hardware, firmware, or any combination thereof. When software is used to implement embodiments, the foregoing embodiments may be implemented completely or partially in a form of a computer program product.

The computer program product includes one or more computer instructions. When the computer program instructions are loaded and executed on the computer, the procedures or functions according to embodiments of this application are completely or partially generated. The computer may be a general-purpose computer, a dedicated computer, a computer network, or another programmable apparatus. The computer instructions may be stored in a computer-readable storage medium, or may be transmitted from a computer-readable storage medium to another computer-readable storage medium. For example, the computer instructions may be transmitted from a website, computer, training device, or data center to another website, computer, training device, or data center in a wired (for example, a coaxial cable, an optical fiber, or a digital subscriber line (DSL)) or wireless (for example, infrared, radio, or microwave) manner. The computer-readable storage medium may be any usable medium that can be stored by a computer, or a data storage device, for example, a training device or a data center, integrating one or more usable media. The usable medium may be a magnetic medium (for example, a floppy disk, a hard disk, or a magnetic tape), an optical medium (for example, a DVD), a semiconductor medium (for example, a solid-state drive (Solid-State Drive, SSD)), or the like.

**Claims**

1. A data processing method, comprising:

   obtaining feature representations of a plurality of knowledge points and a first learning state of a user, wherein the first learning state indicates a user's level of mastery of a learned knowledge point, and the plurality of knowledge points are different from the learned knowledge point; and
   obtaining, by using a decoder based on the feature representations of the plurality of knowledge points, the first learning state, and a learning objective, a learning order corresponding to the plurality of knowledge points, wherein the decoder is configured to identify a relationship between the feature representations of the plurality of knowledge points and the learning objective in the first learning state.

2. The method according to claim 1, wherein obtaining the feature representations of the plurality of knowledge points comprises:

   obtaining the feature representations of the plurality of knowledge points based on information about the plurality of knowledge points by using an encoder, wherein the encoder comprises a first network and a second network, the first network is an attention mechanism-based neural network, and the second network comprises an MLP network; and
   obtaining the feature representations of the plurality of knowledge points based on the information about the plurality of knowledge points by using the encoder comprises:

      obtaining a first feature representation and the second feature representation of the plurality of knowledge points based on the information about the plurality of knowledge points by using the first network and the second network respectively; and
      performing fusion on the first feature representation and the second feature representation to obtain the feature representations.

3. The method according to claim 1 or 2, wherein the second network further comprises an average pooling network connected in parallel with the MLP network.

4. The method according to claim 2 or 3, wherein the fusion is concatenation.

5. The method according to any one of claims 1 to 4, wherein obtaining, by using the decoder based on the feature representations, the learning order corresponding to the plurality of knowledge points comprises:
   sequentially obtaining, by using the decoder based on the feature representations, a knowledge point at each position in the learning order, wherein when determining a knowledge point at an $N^{th}$ position in the learning order, the decoder is configured to identify a relationship between feature representations of other knowledge points different from knowledge points at the N-1 positions in the plurality of knowledge points and the learning objective in the first learning state.

6. The method according to claim 5, wherein the decoder comprises an LSTM

   and an attention layer; and
   sequentially obtaining, by using the decoder based on the feature representations, the knowledge point at each position in the learning order comprises:

      processing, by using the LSTM, the feature representations of the other knowledge points different from the knowledge points at the N-1 positions in the plurality of knowledge points and feature representations of the determined knowledge points at the N-1 positions, to obtain target feature representations of the other knowledge points different from the knowledge points at the N-1 positions in the plurality of knowledge points;
      performing processing based on the target feature representations and the learning objective by using the attention layer, to obtain a probability that each of the other knowledge points is at the $N^{th}$ position; and
      determining, based on the probability that each of the other knowledge points is at the $N^{th}$ position, the knowledge point at the $N^{th}$ position through sampling.

7. A data processing method, comprising:

obtaining feature representations of a plurality of knowledge points and a first learning state of a user, wherein the first learning state indicates a user's level of mastery of a learned knowledge point, and the plurality of knowledge points are different from the learned knowledge point;

obtaining, by using a decoder based on the feature representations of the plurality of knowledge points, the first learning state, and a learning objective, a learning order corresponding to the plurality of knowledge points, wherein the decoder is configured to identify a relationship between the feature representations of the plurality of knowledge points and the learning objective in the first learning state; and

determining a reward value based on a level of mastery of each knowledge point by the user after learning the plurality of knowledge points according to the learning order, wherein the reward value is used to update the decoder.

8. The method according to claim 7, wherein determining the reward value based on the level of mastery of each knowledge point by the user after learning the plurality of knowledge points according to the learning order comprises:

determining the reward value based on the level of mastery of each knowledge point by the user after learning the plurality of knowledge points according to the learning order and a degree of completion of the learning objective by the user after learning the plurality of knowledge points according to the learning order.

9. The method according to claim 7 or 8, wherein obtaining the feature representations of the plurality of knowledge points comprises:

obtaining the feature representations of the plurality of knowledge points based on information about the plurality of knowledge points by using an encoder, wherein the encoder comprises a first network and a second network, the first network is an attention mechanism-based neural network, and the second network comprises an MLP network; and

obtaining the feature representations of the plurality of knowledge points based on the information about the plurality of knowledge points by using the encoder comprises:

obtaining a first feature representation and the second feature representation of the plurality of knowledge points based on the information about the plurality of knowledge points by using the first network and the second network respectively; and

performing fusion on the first feature representation and the second feature representation to obtain the feature representations.

10. The method according to claim 8 or 9, wherein the second network further comprises an average pooling network connected in parallel with the MLP network.

11. The method according to any one of claims 7 to 10, wherein obtaining, by using the decoder based on the feature representations, the learning order corresponding to the plurality of knowledge points comprises:

sequentially obtaining, by using the decoder based on the feature representations, a knowledge point at each position in the learning order, wherein when determining a knowledge point at an $N^{th}$ position in the learning order, the decoder is configured to identify a relationship between feature representations of other knowledge points different from knowledge points at the N-1 positions in the plurality of knowledge points and the learning objective in the first learning state.

12. The method according to claim 11, wherein the decoder comprises an LSTM and an attention layer; and

sequentially obtaining, by using the decoder based on the feature representations, the knowledge point at each position in the learning order comprises:

processing, by using the LSTM, the feature representations of the other knowledge points different from the knowledge points at the N-1 positions in the plurality of knowledge points and feature representations of the determined knowledge points at the N-1 positions, to obtain target feature representations of the other knowledge points different from the knowledge points at the N-1 positions in the plurality of knowledge points;

performing processing based on the target feature representations and the learning objective by using the attention layer, to obtain a probability that each of the other knowledge points is at the $N^{th}$ position; and

determining, based on the probability that each of the other knowledge points is at the $N^{th}$ position, the knowledge point at the N$^{th}$ position through sampling.

13. A data processing apparatus, comprising:

an encoding module, configured to obtain feature representations of a plurality of knowledge points and a first learning state of a user, wherein the first learning state indicates a user's level of mastery of a learned knowledge point, and the plurality of knowledge points are different from the learned knowledge point; and
a decoding module, configured to obtain, by using a decoder based on the feature representations of the plurality of knowledge points, the first learning state, and a learning objective, a learning order corresponding to the plurality of knowledge points, wherein the decoder is configured to identify a relationship between the feature representations of the plurality of knowledge points and the learning objective in the first learning state.

14. The apparatus according to claim 13, wherein the encoder comprises a first

network and a second network, the first network is an attention mechanism-based neural network, and the second network comprises an MLP network; and
the encoding module is specifically configured to:

obtain a first feature representation and the second feature representation of the plurality of knowledge points based on information about the plurality of knowledge points by using the first network and the second network respectively; and
perform fusion on the first feature representation and the second feature representation to obtain the feature representations.

15. The apparatus according to claim 13 or 14, wherein the second network further comprises an average pooling network connected in parallel with the MLP network.

16. The apparatus according to claim 14 or 15, wherein the fusion is concatenation.

17. The apparatus according to any one of claims 13 to 16, wherein the decoding module is specifically configured to: sequentially obtain, by using the decoder based on the feature representations, a knowledge point at each position in the learning order, wherein when determining a knowledge point at an N$^{th}$ position in the learning order, the decoder is configured to identify a relationship between feature representations of other knowledge points different from knowledge points at the N-1 positions in the plurality of knowledge points and the learning objective in the first learning state.

18. The apparatus according to claim 17, wherein the decoder comprises an

LSTM and an attention layer; and
the decoding module is specifically configured to:

process, by using the LSTM, the feature representations of the other knowledge points different from the knowledge points at the N-1 positions in the plurality of knowledge points and feature representations of the determined knowledge points at the N-1 positions, to obtain target feature representations of the other knowledge points different from the knowledge points at the N-1 positions in the plurality of knowledge points;
perform processing based on the target feature representations and the learning objective by using the attention layer, to obtain a probability that each of the other knowledge points is at the N$^{th}$ position; and
determine, based on the probability that each of the other knowledge points is at the N$^{th}$ position, the knowledge point at the N$^{th}$ position through sampling.

19. A data processing apparatus, comprising:

an encoding module, configured to obtain feature representations of a plurality of knowledge points and a first learning state of a user, wherein the first learning state indicates a user's level of mastery of a learned knowledge point, and the plurality of knowledge points are different from the learned knowledge point;
a decoding module, configured to obtain, by using a decoder based on the feature representations of the plurality of knowledge points, the first learning state, and a learning objective, a learning order corresponding to the plurality of knowledge points, wherein the decoder is configured to identify a relationship between the feature representations of the plurality of knowledge points and the learning objective in the first learning state; and an updating module, configured to determine a reward value based on a level of mastery of each knowledge point by the user after learning the plurality of knowledge points according to the learning order, wherein the reward value is used to update the decoder.

20. The apparatus according to claim 19, wherein the updating module is specifically configured to:
determine the reward value based on the level of mastery of each knowledge point by the user after learning the plurality of knowledge points according to the learning order and a degree of completion of the learning objective by the user after learning the plurality of knowledge points according to the learning order.

21. The apparatus according to claim 19 or 20, wherein the encoder comprises a

first network and a second network, the first network is an attention mechanism-based neural network, and the second network comprises an MLP network; and
the encoding module is specifically configured to:

obtain a first feature representation and the second feature representation of the plurality of knowledge points based on information about the plurality of knowledge points by using the first network and the second network respectively; and
perform fusion on the first feature representation and the second feature representation to obtain the feature representations.

22. The apparatus according to claim 20 or 21, wherein the second network further comprises an average pooling network connected in parallel with the MLP network.

23. The apparatus according to any one of claims 19 to 22, wherein the decoding module is specifically configured to:

sequentially obtain, by using the decoder based on the feature representations, a knowledge point at each position in the learning order,
wherein when determining a knowledge point at an $N^{th}$ position in the learning order, the decoder is configured to identify a relationship between feature representations of other knowledge points different from knowledge points at the N-1 positions in the plurality of knowledge points and the learning objective in the first learning state.

24. The apparatus according to claim 23, wherein the decoder comprises an

LSTM and an attention layer; and
the decoding module is specifically configured to:

process, by using the LSTM, the feature representations of the other knowledge points different from the knowledge points at the N-1 positions in the plurality of knowledge points and feature representations of the determined knowledge points at the N-1 positions, to obtain target feature representations of the other knowledge points different from the knowledge points at the N-1 positions in the plurality of knowledge points;
perform processing based on the target feature representations and the learning objective by using the attention layer, to obtain a probability that each of the other knowledge points is at the $N^{th}$ position; and
determine, based on the probability that each of the other knowledge points is at the $N^{th}$ position, the knowledge point at the $N^{th}$ position through sampling.

25. A data processing apparatus, wherein the apparatus comprises a memory and a processor, the memory stores code, and the processor is configured to obtain the code and perform the method according to any one of claims 1 to 12.

26. A computer-readable storage medium, comprising computer-readable instructions, wherein when the computer-readable instructions are run on a computer device, the computer device is enabled to perform the method according to any one of claims 1 to 12.

27. A computer program product, comprising computer-readable instructions, wherein when the computer-readable instructions are run on a computer device, the computer device is enabled to perform the method according to any one of claims 1 to 12.

[FIG. 1]

Intelligent information chain →

Smart product and industry application

Translation/text analysis/... | Voice/vision/image/...

Data ⇄ Data processing: | Data training/machine learning/ deep learning | Searching/ inference/decision making | ...

Infrastructure | Sensor | Smart chip | Basic platform | ...

IT value chain ↑

EP 4 625 303 A1

26

[FIG. 2]

Terminal device 102

Processor 112

Memory 114

Data 116

Model 120

Instruction 118

Input component 122

Communication interface 123

Server 130

Processor 132

Memory 134

Data 136

Model 140

Instruction 138

Communication interface 133

[FIG. 3]

[FIG. 4]

Obtain feature representations of a plurality of knowledge points and a first learning state of a user, where the first learning state indicates a user's level of mastery of a learned knowledge point, and the plurality of knowledge points are different from the learned knowledge point — 401

Obtain, by using a decoder based on the feature representations of the plurality of knowledge points, the first learning state, and a learning objective, a learning order corresponding to the plurality of knowledge points, where the decoder is configured to identify a relationship between the feature representations of the plurality of knowledge points and the learning objective in the first learning state — 402

— 403

Determine a reward value based on a level of mastery of each knowledge point by the user after learning the plurality of knowledge points according to the learning order, where the reward value is used to update the decoder

[FIG. 5]

S: Candidate Set     H: History Sequence     T: Target Concepts     $v_i$: Hidden State     $\pi_i$: Output Policy

EP 4 625 303 A1

[FIG. 6]

Learning path

Test

D → Score:5

85    80    90

A → B → C →

The underlying level of knowledge

| A | 10 |
|---|----|
| B | 15 |
| C | 0  |
| D | 5  |

| A | 85 |
|---|----|
| B | 45 |
| C | 10 |
| D | 15 |

| A | 90 |
|---|----|
| B | 80 |
| C | 40 |
| D | 30 |

| A | 95 |
|---|----|
| B | 85 |
| C | 90 |
| D | 80 |

Score:80 ← D

Test

○ : Learning concept

○ : Target concept

: Student

| A | Mathematical Analysis |
|---|----------------------|
| B | Probability Theory |
| C | Linear Algebra |
| D | Machine Learning |

EP 4 625 303 A1

[FIG. 7]

700

701

Encoding module

702

Decoding module

[FIG. 8]

800

801

Encoding module

802

Decoding module

803

Updating module

[FIG. 9]

900

Execution device

Antenna                                                                    Antenna

| Receiver 901 | Transmitter 902 |

Processor 903

| Memory 904 | Application processor 9031 | Communication processor 9032 |

[FIG. 10]

1000

Server

1010    Central processing unit    Power supply    1010

1041    Operating system

1044    Data

1042    Application

1030    Storage medium

1032    Memory

Wired or wireless network interface    1050

Input/Output interface    10510

[FIG. 11]

## INTERNATIONAL SEARCH REPORT

| International application No. |
|---|
| **PCT/CN2023/137320** |

**A. CLASSIFICATION OF SUBJECT MATTER**

G06Q 50/20(2012.01)i; G06N3/0464(2023.01)i

According to International Patent Classification (IPC) or to both national classification and IPC

**B. FIELDS SEARCHED**

Minimum documentation searched (classification system followed by classification symbols)

IPC:G06Q G06N

Documentation searched other than minimum documentation to the extent that such documents are included in the fields searched

Electronic data base consulted during the international search (name of data base and, where practicable, search terms used)

CNTXT, DWPI, ENTXT, IEEE, CNKI: 编码, 解码, 解码器, 课程, 路径, 目标, 强化学习, 融合, 神经网络, 顺序, 特征, 学习, 掌握, 知识, 注意力, LSTM, MLP, code, decode, course, path, aim, goal, learn, order, network, study, master, hold, knowledge, attention

**C. DOCUMENTS CONSIDERED TO BE RELEVANT**

| Category* | Citation of document, with indication, where appropriate, of the relevant passages | Relevant to claim No. |
|---|---|---|
| PX | CN 116109449 A (HUAWEI TECHNOLOGIES CO., LTD.) 12 May 2023 (2023-05-12) claims 1-27 | 1-27 |
| X | CN 111898020 A (JINAN INSPUR HI-TECH INVESTMENT AND DEVELOPMENT CO., LTD.) 06 November 2020 (2020-11-06) description, paragraphs [0062]-[0109], and figures 1-4 | 1-27 |
| A | CN 113434563 A (BEIJING GAOSI BOLE EDUCATION TECHNOLOGY CO., LTD.) 24 September 2021 (2021-09-24) entire document | 1-27 |
| A | US 2019340945 A1 (MICROSOFT TECHNOLOGY LICENSING, LLC) 07 November 2019 (2019-11-07) entire document | 1-27 |

☐ Further documents are listed in the continuation of Box C.  ☑ See patent family annex.

| * | Special categories of cited documents: |
|---|---|
| "A" | document defining the general state of the art which is not considered to be of particular relevance |
| "D" | document cited by the applicant in the international application |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
|---|---|
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
|---|---|
| **06 February 2024** | **18 February 2024** |

| Name and mailing address of the ISA/CN | Authorized officer |
|---|---|
| **China National Intellectual Property Administration (ISA/ CN)** **China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**
**Information on patent family members**

International application No.

**PCT/CN2023/137320**

| Patent document cited in search report | | | Publication date (day/month/year) | Patent family member(s) | Publication date (day/month/year) |
|---|---|---|---|---|---|
| CN | 116109449 | A | 12 May 2023 | None | |
| CN | 111898020 | A | 06 November 2020 | None | |
| CN | 113434563 | A | 24 September 2021 | None | |
| US | 2019340945 | A1 | 07 November 2019 | None | |

Form PCT/ISA/210 (patent family annex) (July 2022)

**EP 4 625 303 A1**

**REFERENCES CITED IN THE DESCRIPTION**

**Patent documents cited in the description**

- CN 202211581938